# EUROPEAN PATENT SPECIFICATION

(11) **EP 1 449 630 B1**
(45) Date of publication and mention of the grant of the patent: **08.08.2012**
(21) Application number: 04002842.5
(22) Date of filing: 09.02.2004
(51) Int. Cl.: B29B 17/02, B07C 5/342, B03B 9/06, G01N 21/00

(54) **Coated resin sorting method and apparatus**
Verfahren und Vorrichtung zur Trennung von beschichteten Kunststoffen
Procédé et dispositif pour la séparation des resins revêtus

(30) Priority: 19.02.2003 JP 2003041259; 16.05.2003 JP 2003138170
(43) Date of publication of application: 25.08.2004
(73) Proprietor: Mazda Motor Corporation, Aki-gun, Hiroshima-ken (JP); Satake Corporation, Chiyoda-ku, Tokyo (JP)
(72) Inventor: Moriwaki, Kenji, Aki-gun Hiroshima-ken (JP); To, Kazuhisa, Aki-gun Hiroshima-ken (JP); Ikeda, Norimasa, Satake Corporation, Tokyo (JP)
(74) Representative: Laufhütte, Dieter

(56) References cited:
- EP-A- 1 188 531
- EP-A- 1 286 153
- GB-A- 2 121 535
- GB-A- 2 330 409
- ZEIGER E: "SORTIERUNG VON PET-FLAKES MIT MOGENSEN MIKROSORT AF0916 SORTING PET FLAKES WITH THE MOGENSEN MIKRO-SORT AF0916 TRI DES FLOCONS DE PET PAR MIKROSORT MOGENSEN AF0916" AT - AUFBEREITUNGS TECHNIK - MINERAL PROCESSING, AT VERLAG FUER AUFBEREITUNGS, WIESBADEN, DE, vol. 44, no. 11/12, November 2003 (2003-11), pages 41-45, XP001178884 ISSN: 1434-9302
- "KUNSTSTOFFE IN VERPACKUNGSABFAELLEN IDENTIFIZIEREN" KUNSTSTOFFE, CARL HANSER VERLAG. MUNCHEN, DE, vol. 82, no. 4, 1 April 1992 (1992-04-01), pages 293-294, XP000265419 ISSN: 0023-5563

## Description

### FIELD OF THE INVENTION

The present invention relates to a resin material remolding method which, when recycling coated resin molded products, prepares pulverized pieces obtained upon pulverization and coating film peeling, separates the pulverized pieces into those having the coating film adhered and those having no coating film adhered, and performs molding by using only the pulverized pieces having no coating film adhered, and an apparatus for selecting resin material cut pieces.

### BACKGROUND OF THE INVENTION

Generally, when coated resin molded products such as resin bumpers as automobile parts are to be recycled, if a coating film remains as foreign matter in this resin, the resin cracks from this portion when an external force is applied to the resin. In addition to this physical property problem, the external appearance worsens.

Accordingly, it is being desired to perform recycling by using only a resin having no coating film as foreign matter.

To reuse plastic molded products, therefore, a plastic recycling method which recycles plastic molded products by peeling a coating film has already been invented.

That is, this plastic recycling method (e.g., Japanese Patent Laid-Open No. 2001-353721) includes a fine plastic piece formation step of forming a plate-like fine piece aggregate (i.e., fine pieces) of coated plastic molded products, a coating film peeling step of peeling the coating film from the coated fine plastic pieces by rubbing using a mechanical force to obtain a fine piece/powder mixture of the fine pieces from which the coating film is peeled and the coating film powder, and a fine piece/powder separation step of separating this fine piece/powder mixture into the fine pieces from which the coating film is peeled and the coating film powder.

In this method disclosed in Japanese Patent Laid-Open No. 2001-353721, coated resin molded products are pulverized, the coating film is removed by peeling from the pulverized pieces having the coating film adhered, and performs remolding by using the pulverized pieces from which the coating film is peeled.

Unfortunately, this conventional method and its apparatus have the following problems.

That is, peeling the coating film from the pulverized pieces of the coated resin molded products requires a certain processing time (e.g., 50 to 60 min or more) in the rubbing action using the mechanical force, and the removal ratio of the coating film is low compared to the coating film peeling time. It is practically very difficult to completely peel the coating film only with the rubbing action using the mechanical force; even when the processing time is extended to 50 to 60 min or more, the coating film removal ratio does not increase so much.

In addition, if the coating film peeling process described above is continued, the rubbing action by the mechanical force is also exerted on pulverized pieces from which the coating film is already peeled. This decreases the particle diameter of the pulverized pieces too much, and excessively reduces the amount of the pulverized pieces. Consequently, recycle molding cannot be well performed, or the resin collection ratio largely decreases. Furthermore, when the coating film peeling process is continued, the coating film area on each pulverized piece becomes too small. Therefore, if pulverized pieces having the coating film adhered are to be sensed by using a sensor instead of the means disclosed in Japanese Patent Laid-Open No. 2001-353721 by which the fine resin pieces and coating film powder are separated by screening, the sensor is required to have high sensing accuracy, and sensing errors occur.

Other relevant and interesting state of the art includes the teaching of the following documents. In Pasch, "Kunstsfoffe in Verpackungsabfällen identifizieren", Kunststoffe, Carl Hanser Verlag, München, DE, Vol. 82, No. 4, 1992, pp 293-294, trials of different analytical methods, i.a. IR-Spectroscopy, Microwave-Spectroscopy, Pyrolysis-GC and MS were reported for the purpose of on-line determination of different types of polymers in mixed polymer waste. The goal of the ongoing research in this publication was the aid of an automatic sorting system. GB 2 330 409 A discloses a concrete system to identify a type of plastic in a recycling system, where the sample is illuminated with UV light and induced fluorescence is detected. EP 1 286 153 A1 also discloses a method and apparatus for the identification of a plastic type. In this method and apparatus, IR spectroscopy is used and the determined spectrum is compared to infrared spectra of known plastics. GB 2 121 535 A discloses a sorting system applicable to a large variety of objects. These objects are moved forward on a veyor belt and radiated with photons of any desired frequency (from X-ray to IR) for analysis. The reflected image of the object is recorded. The system memorizes the position of each analyzed object and down the line from the analyzer a sorting means, e.g. an air blow nozzle separates certain objects automatically from the remainder of the objects. EP 1 188 531 A2 discloses a resin recycling system, where individual mold products are crushed and packed into transparent bags, that contain one kind of crushed mold particles. The type of mold in each bad is determined using optical identification. After identification, the interiors of the bags are cleaned and forwarded to a further recovery process.

A process for sorting recycled PET-flakes is known from ZEIGER E: "SORTIERUNG VON PET-FLAKES MIT MOGENSEN MIKROSORT AF0916 - AUFBEREITUNGS TECHNIK - MINERAL PROCESSING, AT VERLAG FUER AUFBEREITUNGS, WIESBADEN, DE, vol. 44, no. 11/12, November 2003 (2003-11), pages 41-45, XP001178884 ISSN: 1434-9302

### SUMMARY OF THE INVENTION

It is an object of the present invention to provide an improved resin material remolding method as well as an apparatus for selecting resin material cut pieces, according to which the selection accuracy increases and the reduction in weight of the resin decreases.

The above object is achieved according to the invention by the resin material remolding method as defined in independent claim 1 and by the apparatus for selecting resin material cut pieces as defined in independent claim 8. Particular embodiments of the invention are the subject of the dependent claims. The present invention is made on the basis of the novel findings that when, after pulverization and coating film peeling, pulverized pieces to which the coating film not peeled by the coating film peeling adheres and pulverized pieces having no coating film adhered are separated, a substantial coating film removal ratio effectively increases. The method of the present invention prepares cut pieces obtained upon pulverization and coating film peeling of coated resin molded products, senses and determines the presence/absence of adhesion of the coating film for each individual cut piece, separates a cut piece having the coating film adhered from pulverized pieces having no coating film adhered on the basis of the determination result, and performs molding by using the cut pieces having no coating film adhered after the separation, thereby effectively increasing the coating film removal ratio (the collection catio of cut pieces having no coating film adhered to all cut pieces to be processed) within a short time period without taking a long time in the coating film peeling/separation process, and increasing the material yield.

The apparatus for selecting resin material cut pieces according to the present invention is able to sense, from cut pieces subjected to pulverization and coating film peeling a cut piece having the coating film adhered on the basis of the coating film itself or a specific material present in the coating film, to determine the cut piece having the coating film adhered on the basis of the result of sensing, and to separate the pulverized piece having the coating film adhered from cut pieces having no coating film adhered on the basis of the determination result, thereby effectively increasing the coating film removal ratio within a short time period without taking a long time in the coating film peeling process, and increasing the material yield.

A resin material remolding method according to the present invention, comprises the following steps: a preparation step of cutting a coated resin molded product at random by using a cutting tool having a rotary blade; a peeling step of peeling coating film from cut pieces obtained in said preparation step by rubbing using a mechanical force; and a molding step of performing molding by using the cut pieces having no coating film adhered; wherein said method further comprises: a determination step of sensing and determining the presence/absence of adhesion of the coating film for each individual cut piece after the peeling step, and a separation step of separating a cut piece having the coating film adhered from cut pieces having no coating film adhered, on the basis of the determination result, wherein the determination step senses and determines the presence/absence of adhesion of the coating film by sensing the coating film itself or a specific material present in the coating film by using a sensor; the determination step executes the sensing in a specific position midway along a moving path in which the cut pieces are moved in a specific direction; the separation step executes the separation, when a cut piece having the coating film adhered is sensed in the determination step, by blowing a gas against the cut piece to change a moving direction of the cut piece having the coating film adhered to a direction different from a moving direction of a cut piece having no coating film adhered, and the peeling step performs the peeling within a preditermined time such that the cut pieces having a residual coating film area exceeding 50 mm² remain, in order to be sensed and selected in the determination step and the separation step.

Coating film peeling in the preparation step of the present invention is preferably complete within a time period (e.g., 30 min or less) shorter than the conventional processing time (e.g., 50 to 60 min).

In the preparation step of the present invention, cut pieces obtained upon pulverization of coated resin molded products and coating film peeling of cut pieces are prepared. In the next determination step, the presence/absence of adhesion of the coating film is sensed and determined for each individual cut piece. In the next preparation step, a cut piece having the coating film adhered (a product having the residual coating film) is separated from cut pieces having no coating film adhered (products having no residual coating film) on the basis of the determination result. In the next molding step, molding is performed using the cut pieces having no coating film adhered after the separation step.

As described above, after pulverization and coating film peeling, cut pieces having the coating film adhered and cut pieces having no coating film adhered are separated. Therefore, it is possible to effectively increase the coating film removal ratio (the collection ratio of cut pieces having no coating film adhered with respect to all cut pieces to be processed) within a short time period without taking a long time in the coating film peeling process. Consequently, the material yield can be increased.

Especially when coating film peeling is terminated while the area of the coating film remaining on some pulverized pieces is relatively large and the thus prepared cut pieces are selectively separated into those having the coating film adhered and those having no coating film adhered, the selection accuracy increases, and the reduction in weight of the resin decreases. As a consequence, it is possible to obtain a high collection ratio and increase the coating film removal ratio.

The sensor for sensing the coating film itself can be a photosensor such as a CCD sensor. The sensor for sensing a specific material present in the coating film can be X-ray sensing means for sensing X-rays having a specific wavelength excited from a specific material in the coating film irradiated with X-rays. The specific material can be specified to titanium oxide TiO₂ as a main component of a white pigment, or chlorine Cl as a component of a primer (undercoating of painting) below black coating.

In the above embodiment, it is readily possible to sense a pulverized piece having the coating film adhered by using the sensor.

According to another embodiment of the present invention, the determination step executes the sensing by using a photosensor for sensing the coating film on the basis of a difference in lightness, saturation, or hue from a background color set behind the pulverized pieces and different from a coating film color.

In the embodiment, the coating film can be sensed by using the background color different from the coating film color. Since this reduces sensing errors, the coating film sensing accuracy can be simply and effectively increased.

According to still another embodiment of the present invention, the sensing is executed by sensing means for irradiating the pulverized pieces with X-rays, and sensing X-rays having a specific wavelength excited from a specific material present in the coating film.

The specific wavelength in the embodiment is 4.508 Å when the specific material is titanium oxide, and 2.621 Å when the specific material is chlorine.

In the embodiment, the coating film sensing accuracy can be easily and effectively increased even if the coating film color is the same as or close to the color of the pulverized piece itself.

According to still another embodiment of the present invention, the sensing is executed for the pulverized pieces in a plurality of directions.

The plurality of directions in the above arrangement are preferably a plurality of directions at different angles.

In the embodiment, adhesion of the coating film is sensed in a plurality of directions by the sensor. Accordingly, a pulverized piece having the coating film adhered can be accurately sensed regardless of the posture of the pulverized piece.

According to still another embodiment of the present invention, the determination step executes the sensing in a specific position midway along a moving path in which the pulverized pieces are moved in a specific direction, and the separation step executes the separation, when a pulverized piece having the coating film adhered is sensed in the determination step, by blowing a gas against the pulverized piece to change a moving direction of the pulverized piece having the coating film adhered to a direction different from a moving direction of a pulverized piece having no coating film adhered.

The specific moving direction of the pulverized pieces in the above arrangement can be any of a vertical direction, horizontal direction, and inclined direction.

In the embodiment, coating film sensing can be efficiently executed on a large number of pulverized pieces. Additionally, since the course of moving of a pulverized piece having the coating film adhered can be changed by air blow, pulverized pieces having the coating film adhered and pulverized pieces having no coating film adhered can be separated by a simple method.

According to still another embodiment of the present invention, the movement of the pulverized pieces is falling.

The falling can be natural falling.

The embodiment obviates the need for special moving means (or conveying means) such as conveyor rollers or conveyor belts for moving the pulverized pieces, so pulverized pieces having the coating film adhered and pulverized pieces having no coating film adhered can be separated by a simpler method. Additionally, coating film sensing by the sensor is executed while the pulverized pieces are falling. This allows rapid and easy execution of the series of sensing and separation steps.

According to still another embodiment of the present invention, in the pulverization, the coated resin molded product is pulverized at random by using a cutting tool having a rotary blade, and the determination step is executed, after pulverized pieces are classified into a plurality of groups in accordance with particle diameters of the pulverized pieces, for each classified particle-diameter group.

In the embodiment, the coated resin molded products can be easily pulverized by the cutting tool described above. The pulverized pieces obtained by this random pulverization have various sizes. When coating film sensing is performed, therefore, small-particle-diameter pulverized pieces having the coating film adhered are hidden behind large-particle-diameter pulverized pieces having no coating film adhered, so the sensing accuracy decreases. This can be prevented by classifying the pulverized pieces in accordance with the particle diameter.

According to still another embodiment of the present invention, the coated resin molded product is a used automobile part.

The automobile part in the embodiment can be a coated resin molded product such as a front bumper, rear bumper, front grill, mirror housing, or spoiler.

In the above arrangement, the used automobile part can be recycled through pulverization, coating film peeling, and remolding.

An apparatus for selecting resin material cut pieces obtained upon pulverization of a coated resin molded product and coating film peeling of pulverized pieces according to the present invention, comprises a cutting apparatus for cutting a coated resin molded product at random by using a cutting tool having a rotary blade; a peeling apparatus for peeling coating film from cut pieces obtained by said cutting apparatus by rubbing using a mechanical force; moving means for moving cut pieces in a specific direction; a sensor placed in a specific position with respect to the cut pieces to sense a cut piece having a coating film adhered on the basis of the coating film itself or a specific material present in the coating film; determining means for determining the cut piece having the coating film adhered on the basis of the result of sensing by the sensor; and separating means for separating the cut piece having the coating film adhered from cut pieces having no coating film adhered on the basis of the result of determination by the determining means, wherein said separating means comprises gas blowing means for, when the determining means senses a cut piece having the coating film adhered, blowing a gas against the cut piece to change a moving direction of the cut piece having the coating film adhered to a direction different from a moving direction of a cut piece having no coating film adhered, thereby executing the separation, and said peeling apparatus performs peeling within a predetermined time such that the cut pieces having a residual coating film area exceeding 50 mm² remain, in order to be sensed and selected in the determination step and the separation step.

In the apparatus, the sensor senses a cut piece having the coating film adhered among other cut pieces on the basis of the coating film itself or the specific material present in the coating film. The determining means determines the cut piece having the coating film adhered on the basis of the result of sensing by the sensor. The separating means separates the cut piece having the coating film adhered from cut pieces having no coating film adhered on the basis of the result of determination by the determining means.

As described above, sensing, determination, and separation of the cut pieces having the coating film adhered and cut pieces having no coating film adhered are executed after pulverization and coating film peeling. Therefore, it is possible to effectively increase the coating film removal ratio (the collection ratio of cut pieces having no coating film adhered with respect to all cut pieces to be processed) within a short time period without taking a long time in the coating film peeling process. Consequently, the material yield can be increased.

According to an embodiment of the present invention, the sensor is a photosensor for sensing the coating film on the basis of a difference in lightness, saturation, or hue from a background color different from a coating film color.

The photosensor in the embodiment can be a CCD sensor.

In the embodiment, coating film sensing is executed by using the background color different from the coating film color. Since this reduces sensing errors, the coating film sensing accuracy can be easily and effectively increased.

According to another embodiment of the present invention, the sensor is X-ray sensing means for sensing X-rays having a specific wavelength excited from a specific material present in the coating film when a pulverized piece is irradiated with X-rays.

The specific material in the embodiment can be specified to titanium oxide TiO₂ as a main component of a white pigment, or chloride Cl as a component of a primer below black painting. When the specific material is TiO₂, the specific wavelength is 4.508 Å. When the specific material is Cl, the specific wavelength is 2.621 Å.

In the embodiment, the coating film sensing accuracy can be easily and effectively increased even if the coating film color is the same as or close to the color of the pulverized piece itself.

According to still another embodiment of the present invention, a plurality of the sensors are arranged to sense the presence/absence of adhesion of the coating film for pulverized pieces in a plurality of directions.

The plurality of directions in the embodiment are preferably a plurality of directions at different angles.

In the embodiment, adhesion of the coating film is sensed in a plurality of directions by the sensor. Therefore, a pulverized piece having the coating film adhered can be accurately sensed regardless of the posture of the pulverized piece.

Further the separating means is placed in a specific position midway along a moving path of the moving means for moving pulverized pieces.

The specific moving direction of cut pieces in the embodiment can be any of a vertical direction, horizontal direction, and inclined direction.

In the embodiment, the coating film of a large number of pulverized pieces can be efficiently sensed. In addition, the course of moving of a cut piece having the coating film adhered can be changed by air blow. Therefore, pulverized pieces having the coating film adhered and cut pieces having no coating film adhered can be separated with a simple arrangement.

According to still another embodiment of the present invention, the moving means is dropping means for dropping pulverized pieces.

The falling can be natural falling.

The embodiment eliminates the need for any special moving means such as conveyor rollers and conveyor belts for moving the pulverized pieces. Accordingly, pulverized pieces having the coating film adhered and pulverized pieces having no coating film adhered can be separated with a simpler arrangement. Additionally, since coating film sensing by the sensor is performed while the pulverized pieces are falling, the series of sensing and separation steps can be rapidly and easily performed.

According to still another embodiment of the present invention, the apparatus further comprises classifying means placed in a pulverized piece charge port to classify pulverized pieces into a plurality of groups in accordance with particle diameters of the pulverized pieces, and the sensor performs the sensing for each of the plurality of groups of the pulverized pieces.

In the embodiment, the classifying means classifies the pulverized pieces into a plurality of groups in accordance with the particle diameter. If the pulverized pieces have various sizes, small-particle-diameter pulverized pieces having the coating film adhered are hidden behind large-particle-diameter pulverized piece having no coating film adhered while coating film sensing is performed by the sensor, so the sensing accuracy decreases. Therefore, this can be prevented by a simple arrangement.

According to still another embodiment of the present invention, the classifying means is a screening device for classifying pulverized pieces in accordance with the particle diameter.

In the screening classification in the embodiment, pulverized pieces can be classified into two groups of large and small pieces, three groups of large, medium, and small pieces, or a larger number of groups.

In the embodiment, classification can be appropriately performed by a simple apparatus. The screening device is an apparatus which uses a screen or porous plate having meshes of a predetermined size, and classifies (screens) the pulverized pieces into those which pass through the meshes and those which do not.

Other advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate examples of the invention and, together with the description, serve to explain the principles of the invention.
Fig. 1 is a view for explaining a pulverizer for pulverizing coated resin molded products;
Fig. 2 is a view for explaining a coating film peeling apparatus;
Fig. 3 is a view for explaining a resin material pulverized piece selecting apparatus;
Fig. 4 is an enlarged side view of the main components shown in Fig. 3;
Fig. 5 is a view for explaining an air-blow portion;
Fig. 6 is a block diagram of a control circuit;
Fig. 7 is a flow chart showing a resin material remolding method;
Fig. 8 is a flow chart showing a classification step, determination step, and separation step;
Fig. 9 is a graph showing the relationship between the processing time, residual coating film area, and frequency;
Fig. 10 is a graph showing the relationship between the coating film peeling time and coating film removal ratio;
Fig. 11 is a graph showing the characteristics of the coating film removal ratio;
Fig. 12 is a sectional view showing another embodiment of the present invention;
Fig. 13 is a sectional view showing still another embodiment of the present invention;
Fig. 14 is a side view showing still another embodiment of the present invention;
Fig. 15 is a block diagram of a control circuit of the apparatus shown in Fig. 14; and
Fig. 16 is a side view showing still another embodiment of the present invention.

### DETAILED DESCRIPTION OF THE PREFERRED EMBODIMENTS

Preferred examples of the present invention will now be described in detail in accordance with the accompanying drawings.

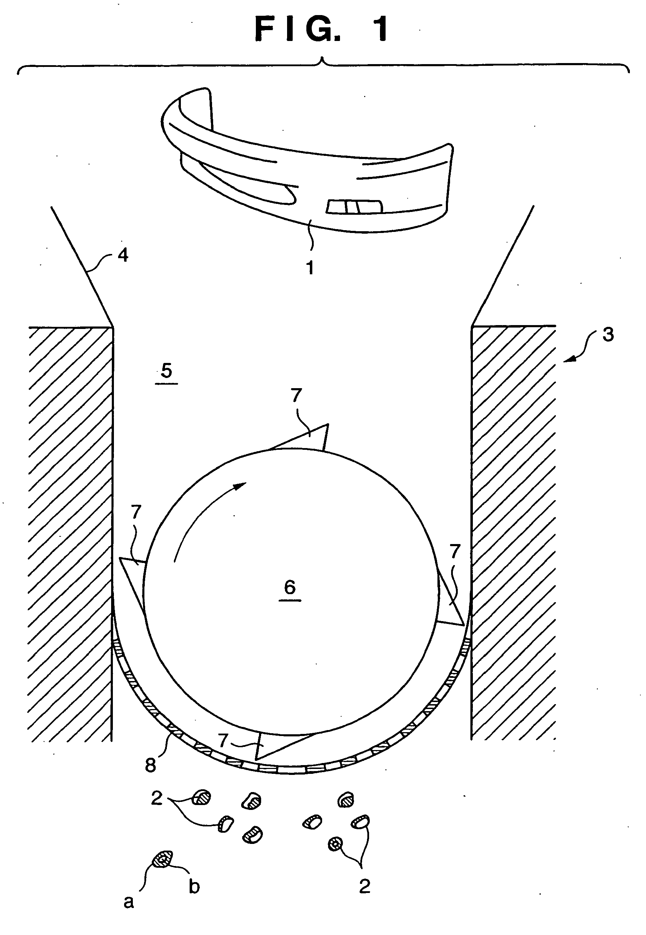

These drawings illustrate a resin material remolding method and resin material pulverized piece selecting apparatus. First, the arrangement of an apparatus for use in the resin material remolding method will be described below with reference to Figs. 1 to 5. For the sake of convenience of explanation, used automobile parts (coated resin molded products) are resin bumpers in the following examples.

Fig. 1 shows a pulverizer 3 for pulverizing a coated resin molded product 1 (resin bumper) into pulverized pieces 2. The pulverizer 3 has a cutter mill 6 as a cutting tool in a pulverization space 5 which continues to a charge port 4. A plurality of rotary blades 7 are integrated with the outer circumferential surface of the cutter mill 6, and a screen 8 is placed below the cutter mill 6. The coated resin molded product 1 charged into the pulverization space 5 is coarsely pulverized at random by rotating the cutter mill 6 in the direction of an arrow, and the pulverized pieces 2 are allowed to fall through the meshes of the screen 8.

The pulverized pieces 2 have various sizes, and the coating film has not been peeled from the pulverized pieces 2. Therefore, a coating film b is sticking to a resin a. In Fig. 1, the resin a is hatched, and the coating film b is blanked.

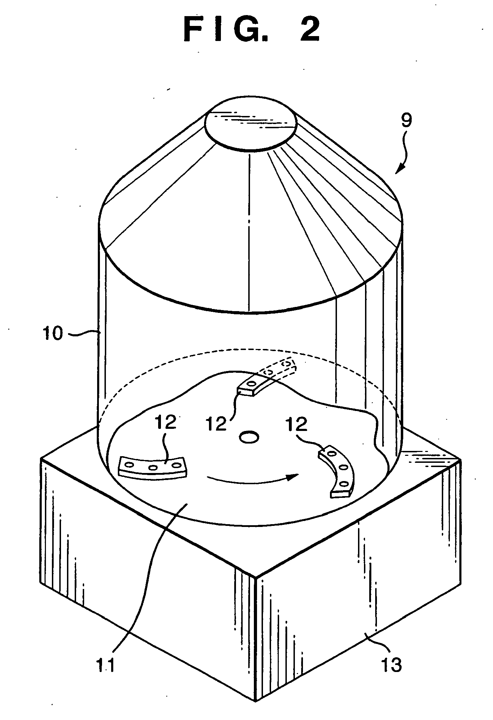

Fig. 2 shows a coating film peeling apparatus 9 for peeling the coating film b from the resin a of the pulverized pieces 2 obtained by the pulverizer 3 shown in Fig. 1. In the coating film peeling apparatus 9, a plurality of blades 12 are attached to a rotary member 11 formed on the inner bottom surface of a peeling bath 10. A driving unit 13 having a built-in motor is placed below the peeling bath 10. When the pulverized pieces 2 are charged into the peeling path 10 and the rotary member 11 is rotated, the coating film b of the pulverized pieces 2 is peeled by the blades 12.

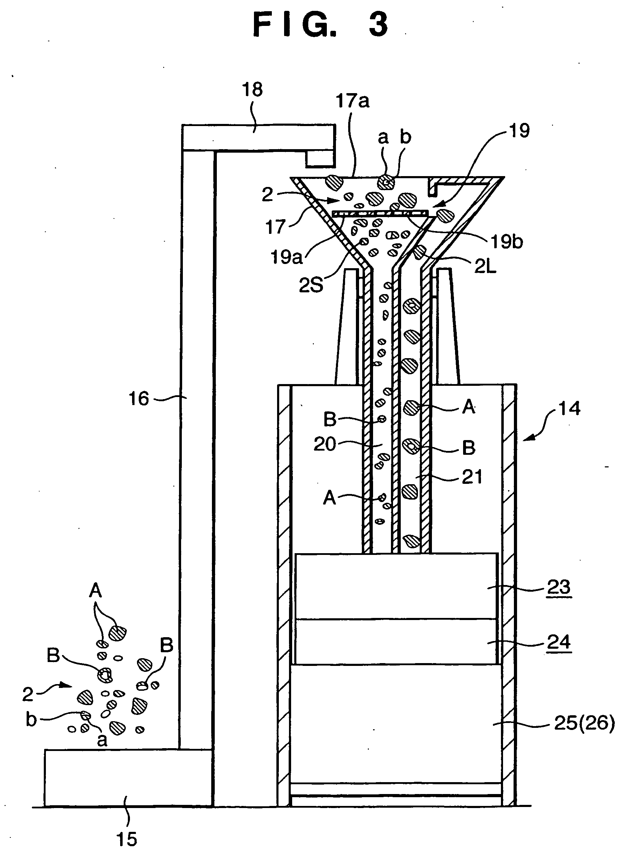

As shown in Fig. 3, the pulverized pieces 2 processed by the coating film peeling apparatus 9 contain pulverized pieces (to be simply referred to as OK products hereinafter) A from which the coating film b is completely removed and which hence has no coating film adhered, and pulverized products (to be simply referred to as NG products hereinafter) B having the coating film b remaining on the resin a, i.e., having the coating film adhered.

Fig. 3 shows a resin material pulverized piece selecting apparatus 14 for performing classification, coating film sensing, and separation for the pulverized products 2 (including both the OK products A and NG products B) processed by the coating film peeling apparatus 9 shown in Fig. 2.

The selecting apparatus 14 includes a material charge port 15 for charging the pulverized pieces 2 having various sizes and containing both the OK products A and NG products B,
a conveyor 16 for conveying upward the pulverized pieces 2 charged through the material charge port 15,
a conveyor 18 formed between the upper portion of the conveyor 16 and a position above a charge port 17a of a hopper 17 to supply the pulverized pieces 2 into the charge port 17a of the hopper 17,
a screening device 19 formed inside the hopper 17 below the charge port 17a to function as a classifying means for classifying the pulverized pieces 2 into a plurality of groups in accordance with the particle diameter (or particle size),
two chutes 20 and 21 (dropping means) as moving means for naturally dropping the pulverized pieces 2 classified by the screening device 19 separately as small pulverized pieces 2S and large pulverized pieces 2L, thereby moving the pulverized pieces 2 in a specific direction, i.e., downward,
a sensor 23 placed below the chutes 20 and 21 to sense the NG products B of the falling pulverized pieces 2 for each of the plurality of groups,
a separator 24 placed below the sensor 23 to separate the NG products B from the OK products A, and
collection tanks 25 and 26 formed below the separator 24 to separately collect the NG products B and OK products A, respectively.

The screening device 19 has a screen or porous plate 19b having meshes 19a of a predetermined size, and screens the pulverized pieces 2 charged from the charge port 17a into the small pulverized pieces 2S which pass through the meshes 19a and the large pulverized pieces 2L which do not pass through the meshes 19a. The small pulverized pieces 2S thus screened naturally fall into the chute 20 as a dropping means, and the large pulverized pieces 2L naturally fall into the chute 21 as another dropping means.

In this example, the pulverized pieces 2 are classified into two sizes, i.e., the small pulverized pieces 2S and large pulverized pieces 2L for the sake of illustrative convenience. However, the pulverized pieces 2 may also be classified into three or more sizes.

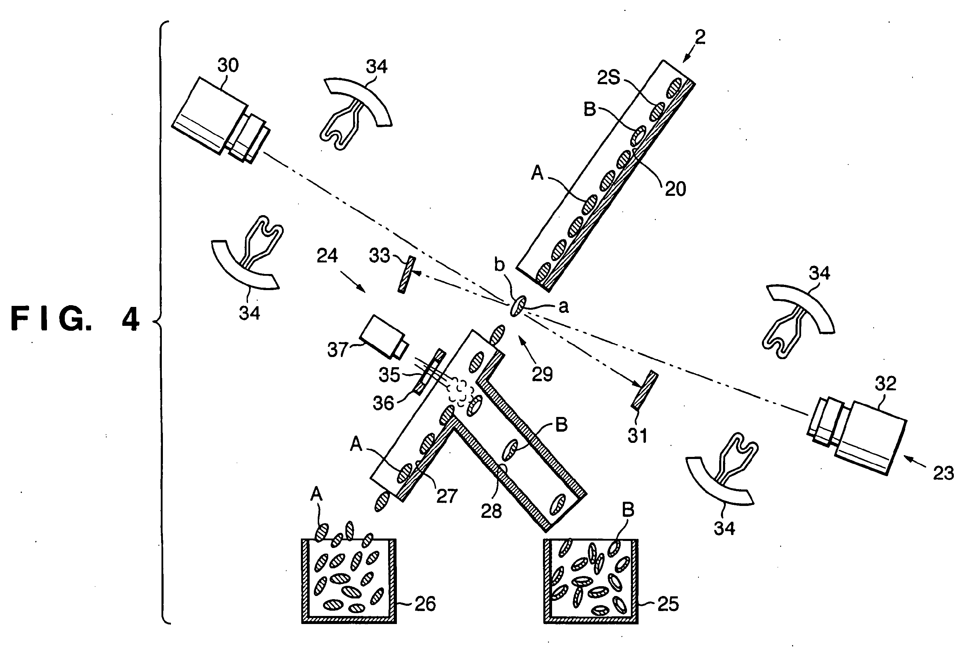

Fig. 4 is an enlarged view for explaining the sensor 23 and collection tanks 25 and 26 shown in Fig. 3. The sensor 23, separator 24, and collection tanks 25 and 26 used for the small pulverized pieces 2S naturally falling in the chute 20 are the same as those used for the large pulverized pieces 2L naturally falling in the chute 21, so the operation of one of these systems will be explained in detail below.

As shown in Fig. 4, the chute 20 is inclined at a predetermined angle from the lower portion of the hopper 17 toward the collection tank 26. A chute extended portion 27 is formed on the extension line of the chute 20. Also, a chute branched portion 28 for guiding the NG products B to the collection tank 25 is branched from the middle portion of the chute extended portion 27.

A sensing space 29 is formed between the lower end of the chute 20 and the upper end of the chute extended portion 27. Instead of the sensing space 29, a colorless, transparent intermediate chute may also be used to connect the lower end of the chute 20 and the upper end of the chute extended portion 27.

A CCD sensor 30 as an photosensor and a background member 31 in background color, e.g., black, different from the coating film color oppose each other in positions above and below the sensing space 29.

The CCD sensor 30 is a photosensor for sensing the NG products B of the naturally falling pulverized pieces 2 from the front of the chute (i.e., in one direction).

To sense the NG products B in another direction, i.e., at an angle different from that of the CCD sensor 30, a CCD sensor 32 as another photosensor and a background member 33 in background color, e.g., black, different from the coating film color oppose each other in positions below and above the sensing space 29.

The CCD sensor 32 is a photosensor for sensing the NG products B of the naturally falling pulverized products 2 from the back of the chute (i.e., in the other direction). The CCD sensors 30 and 32 sense the coating film b on the basis of a difference in lightness, saturation, or hue from the background color of the background members 31 and 33, which is different from the coating film color.

A pair of color fluorescent lamps 34 as illuminating means are arranged near the image sensing lens of each of the CCD sensors 30 and 32. The color of light emitted from the color fluorescent lamps 34 is desirably green in order to reduce sensing errors.

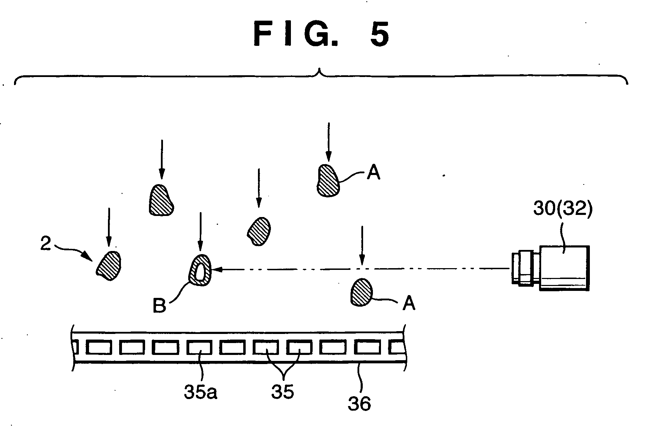

In addition, an ejector 36 having a plurality of air-blow holes 35 (Fig. 5) is formed over the entire width of the falling flow path of the pulverized pieces 2, so as to oppose the upper end opening of the chute branched portion 28. An air-blow nozzle 37 is an air blowing means. When the CCD sensor 30 or 32 senses an NG product B, the air-blow nozzle 37 blows air as a gas against the falling NG product B in synchronism with the falling timing of the NG product B, thereby changing the course of falling from the chute extended portion 27 to the chute branched portion 28. In this manner, the air-blow nozzle 37 changes the moving direction of the NG product B to a direction different from the moving direction of the OK products A, thereby separating the NG product B from the OK products.

As shown in Fig. 5, when the CCD sensor 30 or 32 senses an NG product B, air is blown from a specific air-blow hole 35a of the ejector 36 in synchronism with the timing at which the NG product B falls to a position in front of the ejector 36. As shown in Fig. 4, the course of the NG product B is changed to the chute branched portion 28, and the NB product B is thus separated. If the size of an NG product B is large, air is blown from a plurality of corresponding air-blow holes 35 at the same time. The air-blow nozzle 37 is installed for each of the air-blow holes 35.

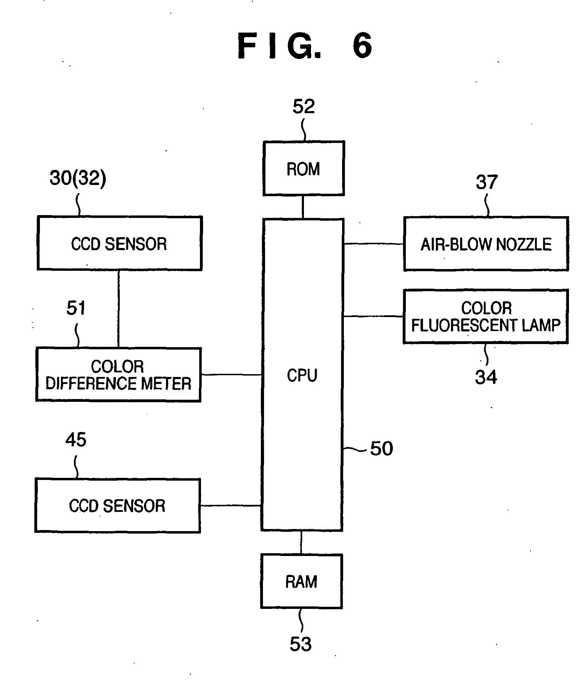

Fig. 6 is a block diagram of a control circuit of the resin material pulverized piece selecting apparatus. On the basis of inputs from the CCD sensors 30 and 32 and a color difference meter 51 as a color difference measurement device, a CPU 50 controls driving of the air-blow nozzles 37 and color fluorescent lamps 34 in accordance with programs stored in a ROM 52. A RAM 53 stores necessary data such as a reference value (reference lightness) for separating the OK products A and NG products B.

Note that a CCD sensor 45 having an X-ray function is used in another example (to be described later).

The CPU 50 also serves as a determining means for determining pulverized pieces 2 having the coating film b adhered, i.e., NG products B on the basis of the results of sensing by the CCD sensors 30 and 32. The separator 24 separates the NG products B from the OK products A on the basis of the results of determination by the CPU 50.

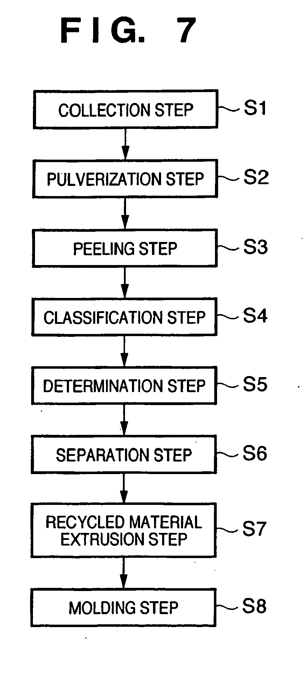

The resin material remolding method will be described below with reference to a flow chart shown in Fig. 7.

In collection step S1, used coated resin molded products 1 (resin bumpers) are collected.

In pulverization step S2, the coated resin molded products 1 are pulverized into pulverized pieces 2 by the pulverizer 3 shown in Fig. 1. That is, the coated resin molded products 1 are charged into the pulverizing space 5 from the charge port 4 of the pulverizer 3, and coarsely pulverized at random by the rotary blades 7 by the rotation of the cutter mill 6.

After pulverization step S2, the coating film b is sticking to the resin a of the pulverized pieces 2, and the pulverized pieces 2 have various sizes.

In peeling step S3, the coating film b is peeled from the pulverized pieces 2. That is, the pulverized pieces 2 obtained in pulverization step S2 are charged into the peeling bath 10 of the coating film peeling apparatus 9 shown in Fig. 2, and the coating film b is peeled from the resin a by the blades 12 by driving the rotary member 11. Steps S1, S2, and S3 of Fig. 7 make up a preparation step of pulverizing the coated resin molded products 1 and preparing the pulverized pieces 2 (including both OK products A and NG products B) from which the coating film is peeled.

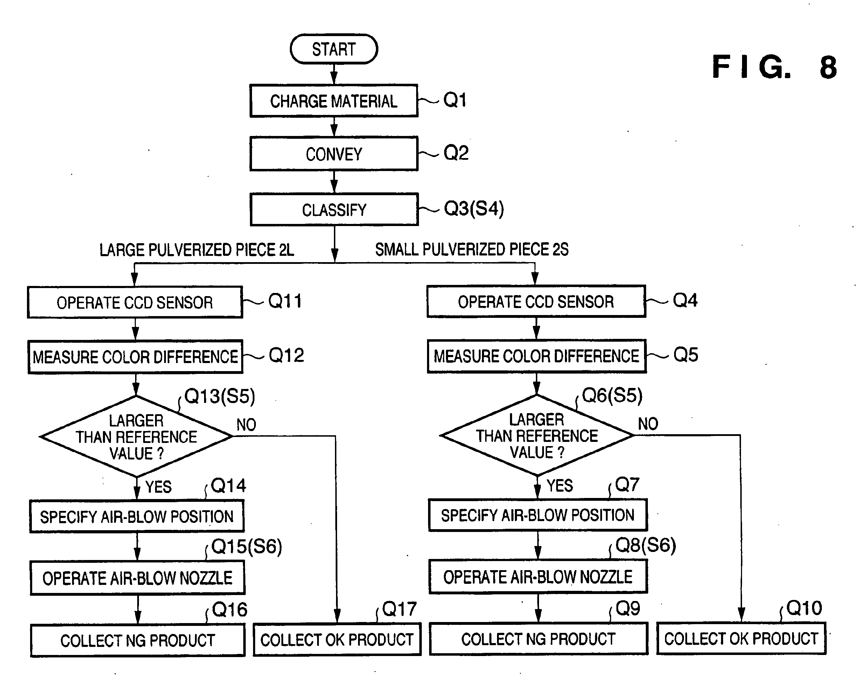

In classification step S4 of Fig. 7, the pulverized pieces 2 from which the coating film is peeled are classified into a plurality of groups in accordance with the particle diameter. In determination step S5 of Fig. 7, the presence/absence of adhesion of the coating film is sensed and determined for each individual pulverized piece 2. In separation step S6 of Fig. 7, the NG products B are separated from the OK products A on the basis of the determination results. Details of steps S4, S5, and S6 will be explained below with reference to Fig. 8.

In step Q1 of Fig. 8, the pulverized pieces 2 obtained upon peeling step S3 (Fig. 7) are charged into the material charge port 15 of the selecting apparatus 14 shown in Fig. 3.

In step Q2, the charged pulverized pieces 2 are conveyed from the charge port 17a of the hopper 17 onto the screening device 19 via the conveyors 16 and 18. In step Q3, the pulverized pieces 2 are screened (classified) into small pulverized pieces 2S which pass through the meshes 19a and large pulverized pieces 2L which do not pass through the meshes 19a by horizontally reciprocating the porous plate 19b of the screening device 19.

The small pulverized pieces 2S having passed through the meshes 19a naturally fall in the chute 20, and the large pulverized pieces 2L not having passed through the meshes 19a naturally fall in the chute 21. That is, it is possible to classify the pulverized pieces 2 in accordance with the particle diameter or particle size, and allow the thus classified pulverized pieces 2 to fall in the chutes 20 and 21 in accordance with the particle diameter.

While the pulverized pieces 2 are naturally falling after the completion of step Q3, determination step S5 and separation step S6 in Fig. 7 are successively executed.

In step Q4, the CPU 50 operates the CCD sensors 30 and 32 to sense the presence/absence of adhesion of the coating film for each of the pulverized pieces 2 naturally falling from the chute 20 to the chute extended portion 27 shown in Fig. 4 by using the background member 31 and CCD sensor 30, or the background member 33 and CCD sensor 32, opposing each other on the two sides of the sensing space 29. The CPU 50 loads the sensed image and performs image processing.

In step Q5, the color difference meter 51 connected to the CCD sensors 30 and 32 measures the color difference.

In step Q6, the CPU 50 compares the measured color difference with a reference value to determine whether the measured color difference is larger than the reference value. If the measured color difference is equal to or smaller than the reference value (NO in step Q6), the flow advances to step Q10. If the measured color difference is larger than the reference value (YES in Q6), the flow advances to step Q7.

In step Q10, the pulverized piece 2 of interest which is an OK product A having a measured color difference equal to or smaller than the reference value is collected from the chute extended portion 27 into the collection tank 26 below the chute extended portion 27, without operating the air-blow nozzles 37.

In step Q7, the position of air blow is specified because the pulverized piece 2 of interest is an NG product B having a measured color difference larger than the reference value. That is, of the air-blow holes shown in Fig. 5, a specific air-blow hole 35a to blow air is set in accordance with the NG product B.

In step Q8, the CPU 50 blows air from the specific air-blow hole 35a (Fig. 5) at the timing at which the NG product B falls in front of the ejector 36, thereby changing the course of fall of the NG product B from the chute extended portion 27 to the chute branched portion 28, i.e., changing the moving direction of the NG product B to a direction different from the moving direction of the OK products A. In this way, the CPU 50 separates the NG product B from the OK products A.

In step Q9, the NG product B is collected from the chute branched portion 28 into the collection tank 25 below the chute branched portion 28.

The above process in steps Q4 to Q10 is performed for the small pulverized pieces 2S. However, the same process is executed for the large pulverized pieces 2L.

That is, in step Q11, the CPU 50 operates the CCD sensors 30 and 32 to sense the presence/absence of adhesion of the coating film for each of the pulverized pieces 2 naturally falling from the chute 20 to the chute extended portion 27 shown in Fig. 4 by using the background member 31 and CCD sensor 30, or the background member 33 and CCD sensor 32, opposing each other on the two sides of the sensing space 29. The CPU 50 loads the sensed image and performs image processing.

In step Q12, the color difference meter 51 connected to the CCD sensors 30 and 32 measures the color difference.

In step Q13, the CPU 50 compares the measured color difference with the reference value to determine whether the measured color difference is larger than the reference value. If the measured color difference is equal to or smaller than the reference value (NO in step Q13), the flow advances to step Q17. If the measured color difference is larger than the reference value (YES in Q13), the flow advances to,step Q14.

In step Q17, the pulverized piece 2 of interest which is an OK product A having a measured color difference equal to or smaller than the reference value is collected from the chute extended portion 27 into the collection tank 26 below the chute extended portion 27, without operating the air-blow nozzles 37.

In step Q14, the position of air blow is specified because the pulverized piece 2 of interest is an NG product B having a measured color difference larger than the reference value. That is, of the air-blow holes shown in Fig. 5, a specific air-blow hole 35a to blow air is set in accordance with the NG product B.

In step Q15, the CPU 50 blows air from the specific air-blow hole 35a (Fig. 5) at the timing at which the NG product B falls in front of the ejector 36, thereby changing the course of fall of the NG product B from the chute extended portion 27 to the chute branched portion 28, i.e., changing the moving direction of the NG product B to a direction different from the moving direction of the OK products A. In this way, the CPU 50 separates the NG product B from the OK products A.

In step Q16, the NG product B is collected from the chute branched portion 28 into the collection tank 25 below the chute branched portion 28.

The OK products A (i.e., the pulverized pieces 2 having no residual coating film b) collected in the collection tank 26 are formed into resin pellets by using an extruder in recycled material extrusion step S7 of the flow chart shown in Fig. 7. In molding step S8, the resin pellets are reused as they are molded into products such as resin bumpers by using an injection molder.

On the other hand, the NG products B (i.e., the pulverized pieces 2 having the residual coating film b) collected in the collection tank 25 are reused as they are molded into low-grade products (e.g., automobile parts used in positions where they cannot be seen from the outside) through steps S7 and S8.

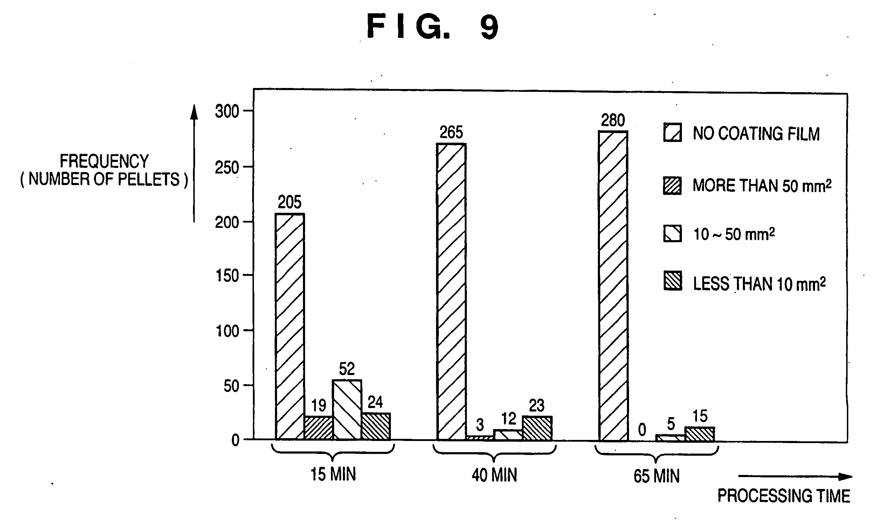

The processing time in peeling step S3 described above is desirably not too short and not too long. Fig. 9 shows measurement data indicating the relationship between the processing time of peeling step S3, the residual coating film area, and the frequency. Referring to Fig. 9, the frequency of pulverized pieces 2 having no coating film is indicated by a hatched bar; the frequency of pulverized pieces 2 having a residual coating film area exceeding 50 mm² is indicated by a solid bar; the frequency of pulverized pieces 2 having a residual coating film area of 10 to 50 mm² is indicated by a blank bar; and the frequency of pulverized pieces 2 having a residual coating film area of less than 10 mm² is indicated by a dotted bar.

As shown in Fig. 9, when the processing time exceeds 60 min (see bars of 65 min), not only the processing time is excessively long, but also the base material (resin a) reduces in weight to decrease the collection ratio.

To avoid this, setting is performed such that a predetermined amount of NG products B having a certain area of the coating film b remain (see bars of 15 and 40 min). In this case, the NG products B are reliably sensed and selected in determination step S5 and separation step S6, so the processing time can be shortened. In addition, the reduction in weight of the base material (resin a) also decreases, and this increases the collection ratio. If the processing time is less than 15 min, the coating film b which is originally removable also remains, so the coating film removal ratio worsens. Therefore, the processing time of peeling step S3 is desirably 15 to 50 min.

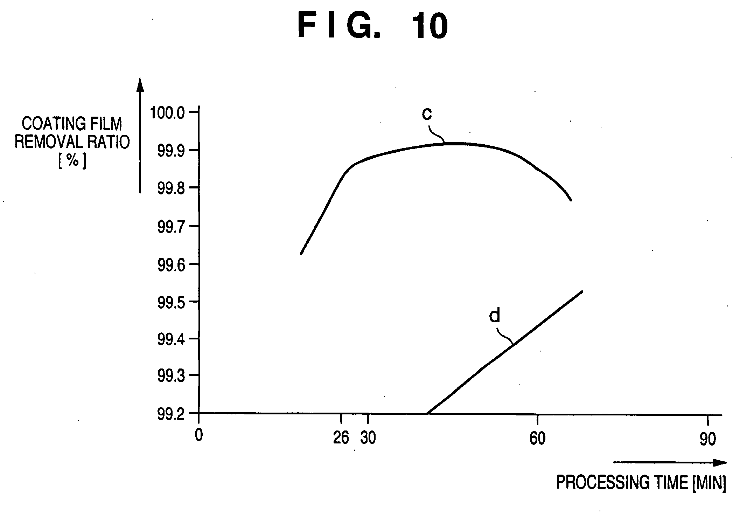

Fig. 10 is a graph showing the relationship between the coating film peeling time and the coating film removal ratio. A curve c indicates the characteristic of this embodiment including steps S2 to S6; and d, the characteristic of a conventional example having only steps S2 and S3.

As shown in the graph of Fig. 10, this embodiment can greatly increase the coating film removal ratio because the pulverized pieces 2 are classified, and the NG products B are sensed and separated from the OK products A. To set the coating film removal ratio at a higher target value, the coating film peeling time is desirably set between 26 and 50 min.

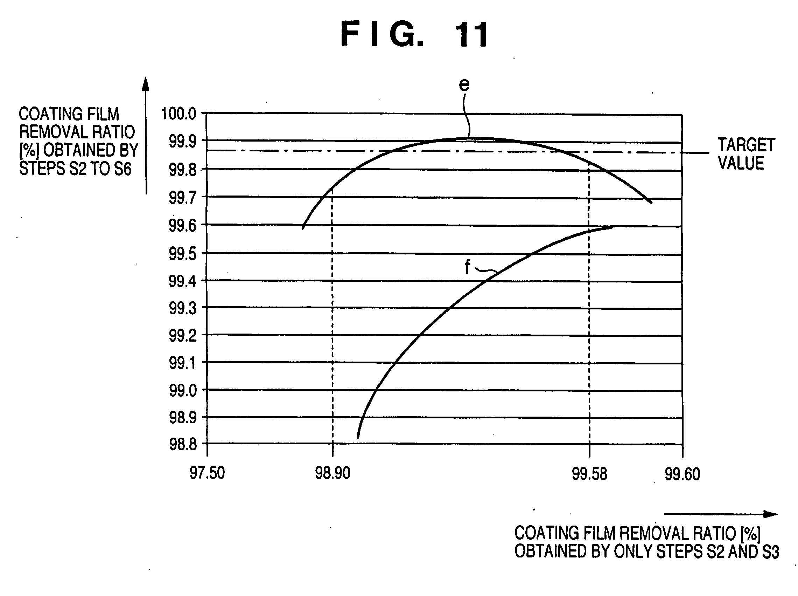

Fig. 11 is a graph in which the abscissa indicates a coating film removal ratio (the ratio of an area from which the coating film is removed to the total pulverized piece area) obtained by only steps S2 and S3, and the ordinate indicates a coating film removal ratio obtained by steps S2 to S6. A curve e indicates the characteristic (corresponding to the curve c in Fig. 10) of this embodiment; and f, the characteristic (corresponding to the curve d in Fig. 10) of the conventional example.

That is, as indicated by the curve e, the coating film removal ratio can be increased by stopping peeling of the coating film when the coating film removal ratio (abscissa) in peeling step S3 is 98.90 to 99.58, and executing steps S4, S5, and S6 after that.

As described above, the resin material remolding method of this example includes preparation steps S1 to S3 of pulverizing coated resin molded products 1 and preparing pulverized pieces 2 from which the coating film is peeled, determination step S5 of sensing and determining the presence/absence of adhesion of the coating film for each individual pulverized piece 2 after preparation steps S1 to S3, separation step S6 of separating, on the basis of the determination result, a pulverized piece (NG product B) having the coating film b adhered from pulverized pieces (OK products A) having no coating film b adhered, and molding step S8 of molding the OK products A after separation step S6.

With this arrangement, in preparation steps S1 to S3, pulverized pieces 2 obtained upon pulverization and coating film peeling of coating resin molded products 1 are prepared. In determination step S5, the presence/absence of adhesion of the coating film is sensed and determined for each individual pulverized piece 2 after reparation steps S1 to S3. In separation step S6, NG products B (products having the residual coating film) are separated from OK products A on the basis of the determination results. In molding step S8, molding is performed using the OK products A after separation step S6.

As described above, after pulverization and coating film peeling, pulverized pieces (NG products B) having the coating film adhered and pulverized pieces (OK products A) having no coating film adhered are separated. Therefore, it is possible to effectively increase the coating film removal ratio (the collection ratio of pulverized pieces having no coating film adhered with respect to all pulverized pieces to be processed) within a short time period without taking a long time in the coating film peeling process. Consequently, the material yield can be increased.

Especially when coating film peeling is terminated while the area of the coating film remaining on some pulverized pieces 2 is relatively large and the thus prepared pulverized pieces 2 are selectively separated into NG products B having the coating film adhered and OK products A having no coating film adhered, the selection accuracy increases, and the reduction in weight of the resin decreases. As a consequence, it is possible to obtain a high collection ratio and increase the coating film removal ratio.

In determination step S5, the presence/absence of adhesion of the coating film is determined by sensing the coating film b itself by the sensor (CCD sensor 30 or 32).

With this arrangement, it is readily possible to sense a pulverized piece 2 having the coating film b adhered, i.e., an NG product B, by using the sensor (CCD sensor 30 or 32).

Furthermore, determination step S5 executes the above sensing by using the photosensor (CCD sensor 30 or 32) which senses the coating film on the basis of the difference in lightness, saturation, or hue from the background color (the background member 31 or 33) different from the coating film color of the pulverized pieces 2.

With this arrangement, the coating film can be sensed by using the background color different from the coating film color. Since this reduces sensing errors, the coating film sensing accuracy can be simply and effectively increased.

In addition, the above sensing is executed on the pulverized pieces 2 in a plurality of directions.

With this arrangement, adhesion of the coating film is sensed in a plurality of directions by the CCD sensors 30 and 32. Accordingly, a pulverized piece 2 having the coating film b adhered can be accurately sensed regardless of the posture of the pulverized piece 2.

Also, in determination step S5, the above sensing is executed in a specific position midway along the moving path in which the pulverized pieces 2 are moved in a particular direction. In separation step S6, if an NG product B is sensed in determination step S5, air is blown against the NG product B to change the moving direction of the NG product B to a direction different from the moving direction of OK products A, thereby executing the separation described previously.

With this arrangement, coating film sensing can be efficiently executed on a large number of pulverized pieces 2. Additionally, since the course of moving of an NG product B can be changed by air blow, NG products B and OK products A can be separated by a simple method.

Also, the movement of the pulverized pieces 2 is falling.

This arrangement obviates the need for special moving means (or conveying means) such as conveyor rollers or conveyor belts for moving the pulverized pieces 2, so NG products B and OK products A can be separated by a simpler method. Additionally, coating film sensing by the CD sensors 30 and 32 is executed while the pulverized pieces 2 are falling. This allows rapid and easy execution of the series of sensing and separation steps.

Furthermore, in the pulverization described above, coated resin molded products 1 are randomly pulverized by the cutter mill 6 (Fig. 1) as a cutting tool having the rotary blades 7. The pulverized pieces 2 are classified into a plurality of groups in accordance with the particle diameter of each pulverized piece 2, and determination step S5 is executed for each classified particle diameter group.

With this arrangement, the coated resin molded products 1 can be easily pulverized by the cutting tool (cutter mill 6). The pulverized pieces 2 obtained by this random pulverization have various sizes. When coating film sensing is performed, therefore, small-particle-diameter pulverized pieces S2 having the coating film b adhered are hidden behind large-particle-diameter pulverized pieces 2L having no coating film b adhered, so the sensing accuracy decreases. This can be prevented by classifying the pulverized pieces 2 in accordance with the particle diameter.

In addition, the coated resin molded products 1 are used automobile parts such as vehicle bumpers.

With this arrangement, these used automobile parts can be recycled through pulverization, coating film peeling, and remolding.

The resin pulverized piece selecting apparatus (Figs. 3 to 5) of the above embodiment is a selecting apparatus for the coated resin molded products 1 obtained upon pulverization and coating film peeling. This selecting apparatus includes the sensors (CCD sensors 30 and 32) installed in specific positions (in this embodiment, positions where these sensors face the sensing space 29) with respect to the pulverized pieces 2 to sense NG products B of the pulverized pieces 2 on the basis of the coating film b itself, the determining means (CPU 50) for determining the NG products B on the basis of the results of sensing by the sensors (CCD sensors 30 and 32), and the separating means (separator 24) for separating the NG products B from OK products A on the basis of the results of determination by the determining means (CPU 50).

With this arrangement, the sensors (CCD sensors 30 and 32) sense NG products B of the pulverized pieces 2 on the basis of the coating film b itself. The determining means (CPU 50) determines the NG products B on the basis of the results of sensing by the sensors (CCD sensors 30 and 32). The separating means (separator 24) separates the NG products B from the OK products A on the basis of the results of determination by the determining means (CPU 50).

As described above, sensing, determination, and separation of the NG products B and OK products A are executed after pulverization and coating film peeling. Therefore, it is possible to effectively increase the coating film removal ratio (the collection ratio of pulverized pieces having no coating film adhered with respect to all pulverized pieces to be processed) within a short time period without taking a long time in the coating film peeling process. Consequently, the material yield can be increased.

Also, the above sensors are photosensors (CCD sensors 30 and 32) which sense the coating film b on the basis of the difference in lightness, saturation, or hue from the background color different from the coating film color.

With this arrangement, coating film sensing is executed by using the background color different from the coating film color. Since this reduces sensing errors, the coating film sensing accuracy can be easily and effectively increased.

Furthermore, the sensors (CCD sensors 30 and 32) sense the presence/absence of adhesion of the coating film for the pulverized pieces 2 in a plurality of directions.

With this arrangement, adhesion of the coating film is sensed in a plurality of directions by the sensors (CCD sensors 30 and 32). Therefore, NG products B can be accurately sensed regardless of the postures of the pulverized pieces 2.

The moving means (chutes 20 and 21) moves the pulverized pieces 2 in a specific direction (in this embodiment, downward). Also, the separating means (separator 24) includes the air blowing means (air blow nozzle 37) placed in a specific position (in this embodiment, a position where the air blowing means faces the sensing space 29) midway along the moving path in which the pulverized pieces 2 are moved by the moving means. When the determining means (CPU 50) senses an NG product B, the air blowing means blows a gas (air) against the NG product B to change the moving direction of the NG product B to a direction different from the moving direction of OK products A, thereby executing the separation described above.

With this arrangement, the coating film of a large number of pulverized pieces 2 can be efficiently sensed. In addition, the course of moving of an NG product B can be changed by air blow. Therefore, the NG products B and OK products A can be separated with a simple arrangement.

Furthermore, the moving means are dropping means (chutes 20 and 21) for dropping the pulverized pieces 2.

This arrangement eliminates the need for any special moving means such as conveyor rollers and conveyor belts for moving the pulverized pieces 2. Accordingly, the NG products B and OK products A can be separated with a simpler arrangement. Additionally, since coating film sensing by the sensors (CCD sensors 30 and 32) is performed while the pulverized pieces 2 are falling, the series of sensing and separation steps can be rapidly and easily performed.

The classifying means (screening device 19) is installed in the charge port 17a for the pulverized pieces 2 to classify the pulverized pieces 2 into a plurality of groups in accordance with the particle diameters of the pulverized pieces 2. The sensors (CCD sensors 30 and 32) perform the sensing described above for each of these groups.

With this arrangement, the classifying means (screening device 19) classifies the pulverized pieces 2 into a plurality of groups in accordance with the particle diameter. If the pulverized pieces have various sizes, small-particle-diameter pulverized pieces S2 having the coating film adhered are hidden behind large-particle-diameter pulverized pieces 2L having no coating film b adhered while coating film sensing is performed by the sensors, so the sensing accuracy decreases. However, this can be prevented by a simple arrangement.

The classifying means is the screening device 19 for classifying the pulverized pieces 2 in accordance with the particle diameter.

With this arrangement, classification can be appropriately performed by a simple apparatus. The screening device 19 uses the screen or porous plate 19b having the meshes 19a of a predetermined size and, classifies (screens) the pulverized pieces 2 into those which pass through the meshes 19a and those which do not.

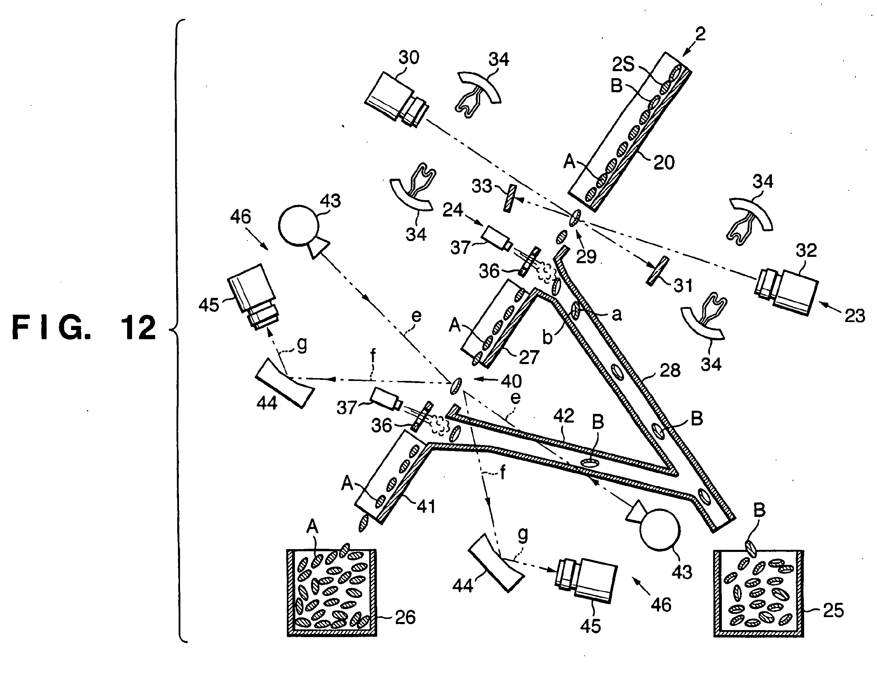

Fig. 12 shows another example of the resin material remolding method and resin material pulverized piece selecting apparatus. This example shown in Fig. 12 eliminates sensing errors by sensing a wavelength unique to titanium oxide TiO₂ as a main component of a white pigment, or a wavelength unique to chlorine C as a component of a primer (undercoating of painting) below black painting, by using fluorescent X-rays.

To achieve this, the example shown in Fig. 12 has the following apparatus in addition to the arrangement shown in Fig. 4.

That is, a lower chute 41 is formed below the inclined lower end portion of a chute extended portion 27 with a sensing space 40 being interposed between them. In addition, a lower chute branched portion 42 connects a middle portion of the lower chute 41 and a middle portion of a chute branched portion 28.

OK products A falling through a chute 20, the chute extended portion 27, and the lower chute 41 are collected by a collection tank 26. NG products B whose course is changed to the chute branched portion 28 and lower chute branched portion 42 are collected by a collection tank 25.

Also, an ejector 36 and air-blow nozzles 37 are arranged to oppose the upper end opening of the lower chute branched portion 42. The arrangements of the elements 36 and 37 are the same as shown in Figs. 4 and 5.

This example also includes an X-ray lamp 43 for emitting X-rays e to detect an NG product B from pulverized pieces 2 falling in the sensing space 40. Fluorescent X-rays f excited from the pulverized pieces 2 irradiated with the X-rays e are separated into spectral components by a spectral crystal 44. A CCD sensor 45 having an X-ray sensing function is an X-ray sensing means for sensing only X-rays g having a specific wavelength.

As shown in Fig. 12, fluorescent X-ray analyzers 46 using the above-mentioned fluorescent X-ray analyzing method are installed on the two sides of the sensing space 40.

Titanium oxide TiO₂ as a main component of a white pigment is detected at the wavelength of titanium Ti. Therefore, the spectral crystal 44 is so chosen as to separate the X-rays g at the wavelength of titanium Ti = 4.508 Å. To detect chlorine Cl as a primer component, the spectral crystal 44 is so chosen as to separate the wavelength of chlorine Cl = 2.621 Å.

To prevent sensing errors by performing only determination and separation on the basis of lightness, saturation, or hue when the CCD sensor 45 senses the specific X-rays g, the air-blow nozzle 37 on the side of the fluorescent X-ray analyzer 46 is driven at the timing at which an NG product B falls to the position of the ejector 36, thereby changing the course of fall of the NG product B containing titanium Ti or chlorine Cl from the lower chute 41 to the lower chute branched portion 42.

This arrangement makes it possible to prevent sensing errors and greatly increase the coating film removal ratio.

In this example shown in Fig. 12, CCD sensors 30 and 32 for sensing the coating film itself are arranged in the upper stage of the chute, and the CCD sensors 45 having an X-ray sensing function of sensing a specific material (Ti or Cl) present in the coating film are arranged in the lower stage of the chute.
That is, coating film sensing is executed by these two, upper and lower stages. However, coating film sensing may also be executed only by one stage made up of the CCD sensors 45. Even in this case, the resin material remolding method is the same as shown in Fig. 7.

In determination step S5 described earlier, the presence/absence of coating film adhesion may also be sensed by thus sensing the specific material present in a coating film b by the sensor (CCD sensor 45). Even in this case, a pulverized product 2 having the coating film b adhered, i.e., an NG product B can be easily sensed by the sensor (CCD sensor 45).

In addition, the pulverized pieces 2 are irradiated with X-rays, and the sensing described above is executed by the sensing means (CCD sensor 45) for sensing X-rays having the specific wavelength excited from the specific material present in the coating film b. Accordingly, even if the color of the pulverized pieces 2 themselves is the same as or close to the coating film color, the coating film sensing accuracy can be easily and effectively increased.

In the example shown in Fig. 12, the rest of the arrangements, functions, and effects is substantially the same as in the previous example. Therefore, the same reference numerals as in the previous drawings denote the same parts in Fig. 12, and a detailed description thereof will be omitted. However, it is, of course, also possible to switch the positions of the determination/separation section using color and the determination/separation section using the fluorescent X-ray analyzers 46 shown in Fig. 12. That is, the fluorescent X-ray analyzers 46 may also be arranged upstream of the determination/separation section using color.

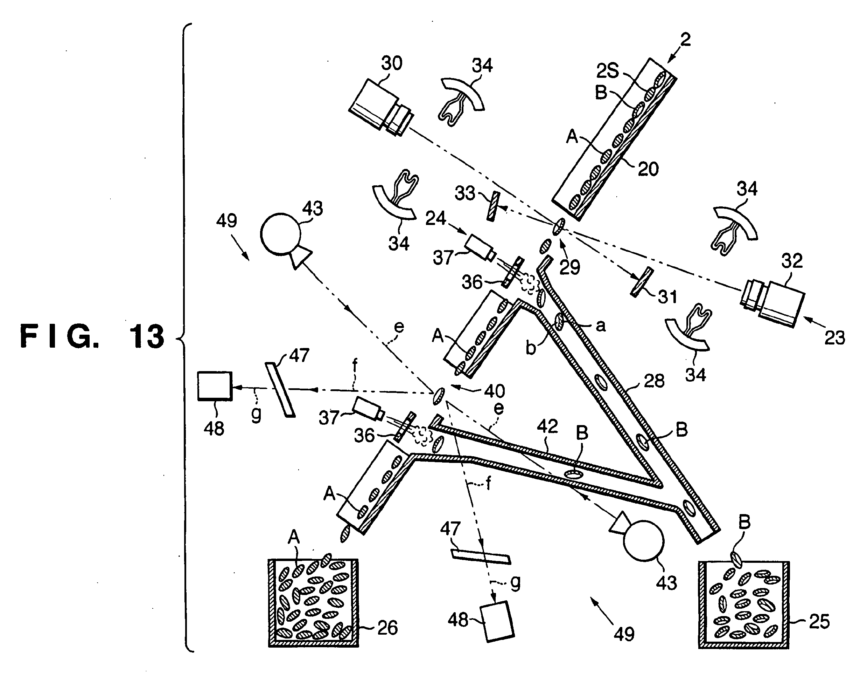

Fig. 13 shows still another example of the resin material remolding method and resin material pulverized piece selecting apparatus. This example uses an optical bandpass filter (so-called BPF) 47 for passing only X-rays having a specific wavelength, and an X-ray sensor 48 for sensing X-rays g of the specific wavelength passing through the BPF 47 and converting the X-rays g into an electrical signal, instead of the spectral crystal 44 and the CCD sensor 45 having an X-ray sensing function in the embodiment shown in Fig. 12.

Fluorescent X-ray analyzers 49 each made up of an element 43, the BPF 47, and the X-ray sensor 48 are arranged on the two sides of a sensing space 40.

Titanium oxide TiO₂ as a main component of a white pigment is detected at the wavelength of titanium Ti. Therefore, the BPF 47 is so selected as to separate the X-rays g at the wavelength of titanium Ti = 4.508 Å. To detect chlorine Cl as a primer component, the BPF 47 is so selected as to separate the wavelength of chlorine Cl = 2.621 Å.

This arrangement also achieves substantially the same functions and effects as in the example shown in Fig. 12. Accordingly, the same reference numerals as in Fig. 12 denote the same parts in Fig. 13, and a detailed explanation thereof will be omitted.

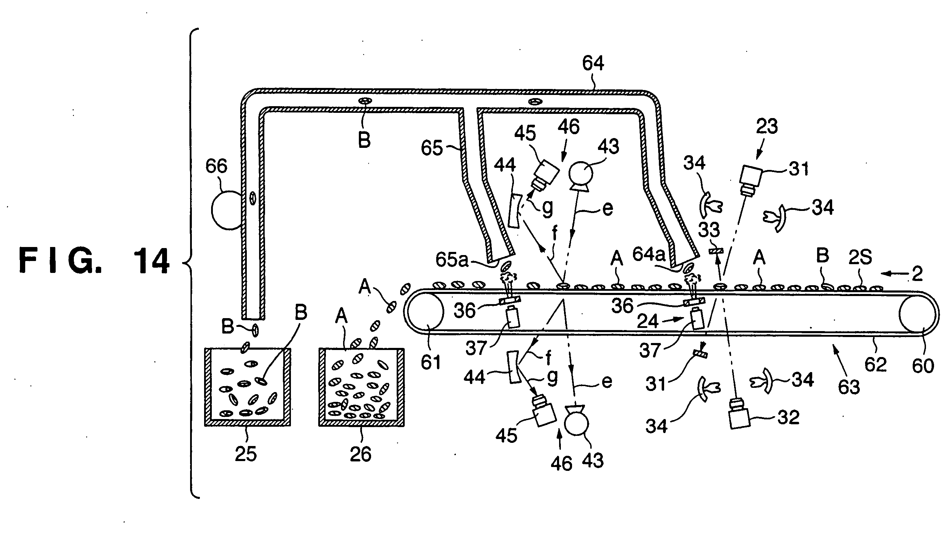

Fig. 14 shows still another example. In the previous examples, pulverized pieces 2 are allowed to naturally fall, and NG products B are detected during this natural fall. In this example, however, an endless, colorless, transparent mesh-like belt 62 is looped between a pair of rollers 60 and 61. Pulverized pieces 2 (i.e., small pulverized pieces 2S or large pulverized pieces 2L) already classified by a screening device 19 are supplied onto the leading end portion of the belt 62, and NG products B are detected while the pulverized pieces 2 are moved from the leading end portion to the trailing end portion.

To allow air from air-blow nozzles 37 to pass through, the belt 62 is formed by fine meshes (e.g., square meshes of about 2 mm side or less). Also, PP (polypropylene), PE (polyethylene), PA (polyamide), or the like is used as the belt material to allow X-rays to pass through.

CCD sensors 30 and 32 and background members 31 and 33 oppose each other in different directions midway along the upstream side of a belt conveyor 63 made up of the pair of rollers 60 and 61 and belt 62. The air-blow nozzles 37 are arranged immediately downstream of this position where the sensors and background members oppose each other.

A pair of upper and lower fluorescent X-ray analyzers 46 each made up of elements 43, 44, and 45 are arranged midway along the downstream side of the belt conveyor 63. The air-blow nozzles 37 are arranged immediately downstream of this position where these analyzers are arranged.

Furthermore, a collection tank 26 for collecting OK products A is placed below the trailing end of the belt conveyor 63, and a collection tank 25 for collecting NG products B is placed outside the collection tank 26.

In addition, a main duct 64 extends from a position above the collection tank 25 to a position above the air-blow nozzles 37 in the middle of the upstream side to draw NG products B by a negative pressure. Also, a sub duct 65 extends from a middle portion of the main duct 64 to a position above the air-blow nozzles 37 in the middle of the downstream side.

A vacuum pump 66 is attached to the main duct 64 near the collection tank 25. A negative pressure is generated in the ducts 64 and 65 by driving the vacuum pump 66. The vacuum pump 66 is driven at all times. NG product suction ports 64a and 65a of the main ducts 64 and sub ducts 65, respectively, are formed to be thin and narrow over the entire width of the belt 62.

The air-blow nozzles 37 blow NG products B upward to negative-pressure areas (vacuum regions) of the suction ports 64a and 65a. The NG products B blown upward to the negative-pressure areas are drawn by the negative pressure, and collected in the collection tanks 25.

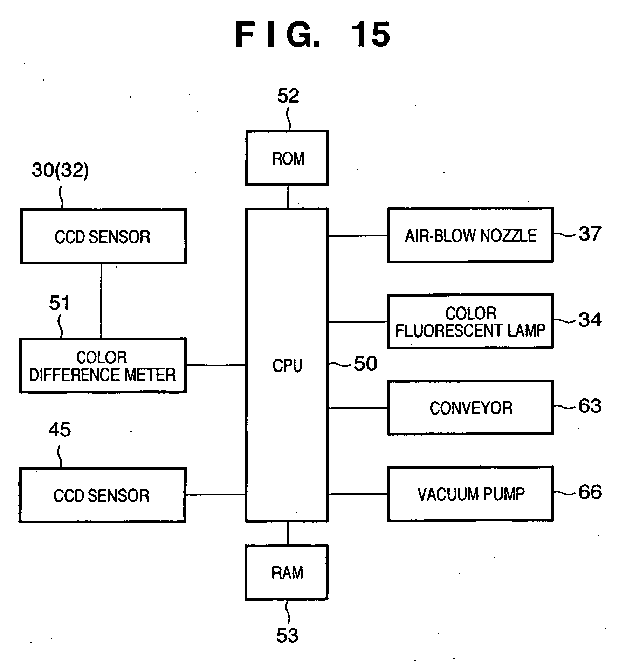

Fig. 15 is a block diagram of a control circuit of the apparatus shown in Fig. 14. On the basis of inputs from the CCD sensors 30 and 32, a color difference meter 51, and the CCD sensors 45 having an X-ray sensing function, a CPU 50 controls driving of the air-blow nozzles 37, color fluorescent lamps 34, the belt conveyor 63, and the vacuum pump 66 in accordance with programs stored in a ROM 52. A RAM 53 stores necessary data such as a reference value (reference lightness) for separating OK products A and NG products B.

Even when the resin material pulverized piece selecting apparatus shown in Fig. 14 and the control circuit shown in Fig. 15 are used, resin material remolding can be performed following the same procedures as in the flow chart shown in Fig. 7 except for the moving direction of the pulverized pieces 2. Since the rest of the arrangements, functions, and effects is substantially the same as in the previous examples, the same reference numerals as in the previous drawings denote the same parts in Figs. 14 and 15, and a detailed description thereof will be omitted.

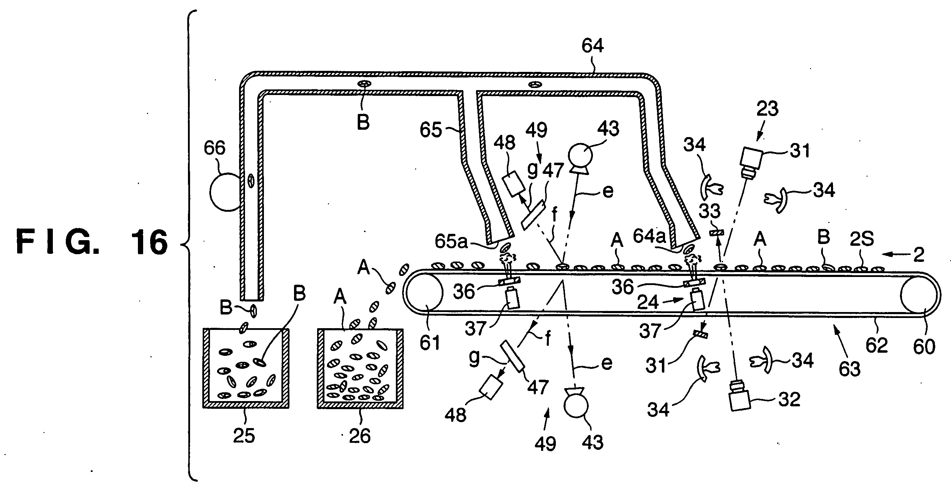

Fig. 16 shows still another embodiment. This example shown in Fig. 16 uses a fluorescent X-ray analyzer 49 made up of elements 43, 47, and 48, instead of the fluorescent X-ray analyzer 46 made up of the elements 43, 44, and 45 in the embodiment shown in Fig. 14.

The rest of the arrangements, functions, and effects is substantially the same as the example shown in Figs. 14 and 15. Therefore, the same reference numerals as in the previous drawings denote the same parts in Fig. 16, and a detailed description thereof will be omitted. In the examples shown in Figs. 14 and 16, the accuracy of sensing and determination of NG products B can be increased by properly controlling the running speed of the belt 62.

That is, in the examples shown in Figs. 14 and 16, the moving speed of the pulverized pieces 2 can be properly controlled in accordance with selection by controlling the driving speed of the belt 62.

The coating film peeling apparatus used in peeling step S3 shown in Fig. 7 may also be the following apparatus, instead of the apparatus shown in Fig. 2.

That is, a coating film b made of a thermosetting resin can be peeled from a thermoplastic resin a such as polypropylene by using a mechanical peeling apparatus having a rotary blade on the bottom of a bath. In this apparatus, the coating film b is peeled by using a difference between the resin a which is easy to bend and the coating film b which is hard to bend by applying shear stress to a pulverized piece 2 at the softening temperature of the resin a as a base material.

It is also possible to use an apparatus (so-called cone press) which peels the coating film b from the resin a by applying a compressive force to a pulverized piece 2 in a slit between a fixed cone and liner by using vibrating compression, shearing force, and surface polishing produced between the fixed cone and liner, thereby lowering the adhesion of the coating film b.

In addition, a shot peening apparatus or shot blasting apparatus which peels the coating film b by impact by peening or blasting the surface of a pulverized piece 2 with shots (small spheres).

The arrangements of the present invention described in claims correspond to the aforementioned examples as follows.

That is, a coated resin molded product of the invention corresponds to the resin bumper of the embodiments.

Likewise,
a pulverized piece having the coating film adhered corresponds to the NG product B,
a pulverized piece having no coating film adhered corresponds to the OK product A,
a sensor corresponds to the CCD sensors 30 and 32, the CCD sensor 45 having an X-ray sensing function, or the X-ray sensor 48,
a cutting tool for pulverizing a molded product corresponds to the cutter mill 6,
a background color corresponds to the background members 31 and 33,
a charge port corresponds to the charge port 17a in the upper portion of the hopper 17,
separating means corresponds to the separator 24,
classifying means corresponds to the screening device 19,
gas blowing means corresponds to the air-blow nozzle 37,
a preparation step corresponds to steps S1 to S3 in Fig. 7,
a specific material corresponds to titanium oxide or chlorine,
sensing means for sensing X-rays corresponds to the CCD sensor 45 or X-ray sensor 48,
determining means corresponds to the CPU 50,
moving means corresponds to the chutes 20 and 21 and belt conveyor 63, and
dropping means corresponds to the chutes 20 and 21.

As many apparently widely different examples of the present invention can be made without departing from the scope thereof, it is to be understood that the invention is not limited to the specific examples thereof except as defined in the appended claims.

## Claims

1. A resin material remolding method comprising:
a preparation step (S2) of cutting a coated resin molded product at random by using a cutting tool (6) having a rotary blade (7);
a peeling step (S3) of peeling coating film from cut pieces obtained in said preparation step by rubbing using a mechanical force; and
a molding step (S8) of performing molding by using the cut pieces having no coating film adhered;
wherein said method further comprises:
a determination step (S5) of sensing and determining the presence/absence of adhesion of the coating film for each individual cut piece after the peeling step; and
a separation step (S6) of separating a cut piece having the coating film adhered from cut pieces having no coating film adhered, on the basis of the determination result; and wherein:
the determination step (S5) senses and determines the presence/absence of adhesion of the coating film by sensing the coating film itself or a specific material present in the coating film by using a sensor;
the determination step (S5) executes the sensing in a specific position midway along a moving path in which the cut pieces are moved in a specific direction;
the separation step (S6) executes the separation, when a cut piece having the coating film adhered is sensed in the determination step (S5), by blowing a gas against the cut piece to change a moving direction of the cut piece having the coating film adhered to a direction different from a moving direction of a cut piece having no coating film adhered, and
the peeling step (S3) performs the peeling within a predetermined time such that the cut pieces having a residual coating film area exceeding 50 mm² remain, in order to be sensed and selected in the determination step (S5) and the separation step (S6).

2. The method according to claim 1, **characterized in that** the determination step (S5) executes the sensing by using a photosensor (30, 31) for sensing the coating film on the basis of a difference in lightness, saturation, or hue from a background color set behind the cut pieces and different from a coating film color.

3. The method according to claim 1, **characterized in that** the sensing is executed by sensing means (45) for irradiating the cut pieces with X-rays, and sensing X-rays having a specific wavelength excited from a specific material present in the coating film.

4. The method according to any preceding claim, **characterized in that** the sensing is executed for the cut pieces in a plurality of directions.

5. The method according to any preceding claim, **characterized in that** the movement of the cut pieces is falling.

6. The method according to any preceding claim, **characterized in that** the determination step (S5) is executed, after cut pieces are classified into a plurality of groups in accordance with particle diameters of the cut pieces, for each classified particle-diameter group.

7. The method according to any preceding claim, **characterized in that** the coated resin molded product is a used automobile part (1).

8. An apparatus for selecting resin material cut pieces comprising:
a cutting apparatus (3) for cutting a coated resin molded product at random by using a cutting tool (6) having a rotary blade (7); and
a peeling apparatus (9) for peeling coating film from cut pieces obtained by said cutting apparatus (3) by rubbing using a mechanical force;
**characterized in that** said selecting apparatus further comprises:
moving means (20, 21) for moving cut pieces in a specific direction;
a sensor placed in a specific position with respect to the moving cut pieces to sense a cut piece having a coating film adhered on the basis of the coating film itself or a specific material present in the coating film;
determining means (50) for determining the cut piece having the coating film adhered on the basis of the result of sensing by said sensor; and
separating means (24) for separating the cut piece having the coating film adhered from cut pieces having no coating film adhered on the basis of the result of determination by said determining means (50);
wherein:
said separating means comprises gas blowing means (37) for, when said determining means senses a cut piece having the coating film adhered, blowing a gas against the cut piece to change a moving direction of the cut piece having the coating film adhered to a direction different from a moving direction of a cut piece having no coating film adhered, thereby executing the separation, and
said peeling apparatus performs the peeling within a predetermined time such that the cut pieces having a residual coating film area exceeding 50 mm² remain, in order to be sensed and selected in the determination step (S5) and the separation step (S6).

9. The apparatus according to claim 8, **characterized in that** said sensor is a photosensor (30, 31) for sensing the coating film on the basis of a difference in lightness, saturation, or hue from a background color different from a coating film color.

10. The apparatus according to claim 9, **characterized in that** said sensor is X-ray sensing means (45) for sensing X-rays having a specific wavelength excited from a specific material present in the coating film when a cut piece is irradiated with X-rays.

11. The apparatus according to any one of claims 8 to 10, **characterized in that** a plurality of said sensors are arranged to sense the presence/absence of adhesion of the coating film for cut pieces in a plurality of directions.

12. The apparatus according to any one of claims 8 to 11, **characterized by** further comprising moving means (20, 21) for moving cut pieces in a specific direction, wherein said separating means (24) is placed in a specific position midway along a moving path of said moving means for moving cut pieces and comprises gas blowing means (37) for, when said determining means senses a cut piece having the coating film adhered, blowing a gas against the cut piece to change a moving direction of the cut piece having the coating film adhered to a direction different from a moving direction of a cut piece having no coating film adhered, thereby executing the separation.

13. The apparatus according to claim 12, **characterized in that** said moving means (20, 21) is dropping means for dropping cut pieces.

14. The apparatus according to any one of claims 8 to 13, **characterized by** further comprising classifying means (19) placed in a cut piece charge port to classify cut pieces into a plurality of groups in accordance with particle diameters of the cut pieces, wherein said sensor performs the sensing for each of said plurality of groups of the cut pieces.

15. The apparatus according to claim 14, **characterized in that** said classifying means (19) is a screening device for classifying cut pieces in accordance with the particle diameter.

## Patentansprüche

1. Harzmaterialumformungsverfahren, welches umfasst:
einen Vorbereitungsschritt (S2) des willkürlichen Schneidens eines beschichteten Harzformerzeugnisses durch Verwenden eines Schneidewerkzeugs (6), das ein Drehmesser (7) aufweist;
einen Abziehschritt (S3) des Abziehens eines Beschichtungsfilms von geschnittenen Stücken, die in dem Vorbereitungsschritt erhalten wurden, durch Reiben unter Aufwenden einer mechanischen Kraft; und
einen Formschritt (S8) des Durchführens von Formen durch Verwenden der geschnittenen Stücke, die keinen anhaftenden Beschichtungsfilm aufweisen;
wobei das Verfahren weiterhin umfasst:
einen Ermittlungsschritt (S5) des Erfassens und Ermittelns des Vorhandenseins/Fehlens von Anhaften des Beschichtungsfilms für jedes einzelne geschnittene Stück nach dem Abziehschritt; und
einen Trennschritt (S6) des Trennens eines geschnittenen Stücks, das den anhaftenden Beschichtungsfilm aufweist, von geschnittenen Stücken, die keinen anhaftenden Beschichtungsfilm aufweisen, auf der Grundlage des Ermittlungsergebnisses; und wobei:
der Ermittlungsschritt (S5) das Vorhandensein/Fehlen von Anhaften des Beschichtungsfilms durch Erfassen des Beschichtungsfilms selbst oder eines in dem Beschichtungsfilm vorhandenen bestimmten Materials durch Verwenden eines Sensors erfasst und ermittelt;
der Ermittlungsschritt (S5) das Erfassen in einer bestimmten Position mitten entlang eines Bewegungswegs, in dem die geschnittenen Stücke in einer bestimmten Richtung bewegt werden, ausführt;
der Trennschritt (S6) die Trennung ausführt, wenn ein geschnittenes Stück, das den anhaftenden Beschichtungsfilm aufweist, in dem Ermittlungsschritt (S5) erfasst wird, indem ein Gas gegen das geschnittene Stück geblasen wird, um eine Bewegungsrichtung des den anhaftenden Beschichtungsfilm aufweisenden geschnittenen Stücks zu einer Richtung zu ändern, die sich von einer Bewegungsrichtung eines keinen anhaftenden Beschichtungsfilm aufweisenden geschnittenen Stücks unterscheidet, und
der Abziehschritt (S3) das Abziehen innerhalb einer vorbestimmten Zeit durchführt, so dass die geschnittenen Stücke mit einer restlichen Beschichtungsfilmfläche, die 50 mm² übersteigt, zurückbleiben, um in dem Ermittlungsschritt (S5) und dem Trennschritt (S6) erfasst und gewählt zu werden.

2. Verfahren nach Anspruch 1, **dadurch gekennzeichnet, dass** der Ermittlungsschritt (S5) das Erfassen durch Verwenden eines Photosensors (30, 31) zum Erfassen des Beschichtungsfilms auf der Grundlage eines Unterschieds in Helligkeit, Sättigung oder Farbton von einer hinter den geschnittenen Stücken eingestellten Hintergrundfarbe, die sich von einer Beschichtungsfilmfarbe unterscheidet, ausführt.

3. Verfahren nach Anspruch 1, **dadurch gekennzeichnet, dass** das Erfassen durch Erfassungsmittel (45) zum Bestrahlen der geschnittenen Stücke mit Röntgenstrahlen und Erfassen von Röntgenstrahlen mit einer bestimmten Wellenlänge, die von einem in dem Beschichtungsfilm vorhandenen bestimmten Material angeregt werden, ausgeführt wird.

4. Verfahren nach einem der vorhergehenden Ansprüche, **dadurch gekennzeichnet, dass** das Erfassen für die geschnittenen Stücke in mehreren Richtungen ausgeführt wird.

5. Verfahren nach einem der vorhergehenden Ansprüche, **dadurch gekennzeichnet, dass** die Bewegung der geschnittenen Stücke Fallen ist.

6. Verfahren nach einem der vorhergehenden Ansprüche, **dadurch gekennzeichnet, dass**, nachdem geschnittene Stücke zu mehreren Gruppen gemäß Partikeldurchmessern der geschnittenen Stücke klassifiziert wurden, der Ermittlungsschritt (S5) für jede klassifizierte Partikeldurchmessergruppe ausgeführt wird.

7. Verfahren nach einem der vorhergehenden Ansprüche, **dadurch gekennzeichnet, dass** das beschichtete Harzformerzeugnis ein gebrauchtes Kraftfahrzeugteil (1) ist.

8. Vorrichtung zum Wählen von geschnittenen Stücken aus Harzmaterial, welche umfasst:
eine Schneidvorrichtung (3) zum willkürlichen Schneiden eines beschichteten Harzformerzeugnisses durch Verwenden eines Schneidwerkzeugs (6), das ein Drehmesser (7) aufweist; und
eine Abziehvorrichtung (9) zum Abziehen von Beschichtungsfilm von geschnittenen Stücken, die durch die Schneidvorrichtung (3) erhalten wurden, durch Reiben unter Anwenden einer mechanischen Kraft;
**dadurch gekennzeichnet, dass** die Wählvorrichtung weiterhin umfasst:
Bewegungsmittel (20, 21) zum Bewegen von geschnittenen Stücken in einer bestimmten Richtung;
einen in einer bestimmten Position bezüglich der sich bewegenden geschnittenen Stücke platzierten Sensor, um ein einen anhaftenden Beschichtungsfilm aufweisendes geschnittenes Stück auf der Grundlage des Beschichtungsfilms selbst oder eines in dem Beschichtungsfilm vorhandenen bestimmten Materials zu erfassen;
Ermittlungsmittel (50) zum Ermitteln des den anhaftenden Beschichtungsfilm aufweisenden geschnittenen Stücks auf der Grundlage des Ergebnisses des Erfassens durch den Sensor; und
Trennmittel (24) zum Trennen des den anhaftenden Beschichtungsfilm aufweisenden geschnittenen Stücks von keinen anhaftenden Beschichtungsfilm aufweisenden geschnittenen Stücken auf der Grundlage des Ergebnisses der Ermittlung durch das Ermittlungsmittel (50);
wobei:
das Trennmittel umfasst: Gasblasmittel (37) zum Blasen eines Gases gegen das geschnittene Stück, wenn das Ermittlungsmittel ein den anhaftenden Beschichtungsfilm aufweisendes geschnittenes Stück erfasst, um eine Bewegungsrichtung des den anhaftenden Beschichtungsfilm aufweisenden geschnittenen Stücks zu einer Richtung zu ändern, die sich von einer Bewegungsrichtung eines keinen anhaftenden Beschichtungsfilm aufweisenden geschnittenen Stücks unterscheidet, wodurch die Trennung ausgeführt wird, und
die Abziehvorrichtung das Abziehen innerhalb einer vorbestimmten Zeit durchführt, so dass die geschnittenen Stücke, die eine restliche Beschichtungsfilmfläche aufweisen, die 50 mm² übersteigt, zurückbleiben, um in dem Ermittlungsschritt (S5) und dem Trennschritt (S6) erfasst und gewählt zu werden.

9. Vorrichtung nach Anspruch 8, **dadurch gekennzeichnet, dass** der Sensor ein Photosensor (30, 31) zum Erfassen des Beschichtungsfilms auf der Grundlage eines Unterschieds in Helligkeit, Sättigung oder Farbton von einer Hintergrundfarbe, die sich von einer Beschichtungsfilmfarbe unterscheidet, ist.

10. Vorrichtung nach Anspruch 9, **dadurch gekennzeichnet, dass** der Sensor ein Röntgenerfassungsmittel (45) zum Erfassen von Röntgenstrahlen mit einer bestimmten Wellenlänge, die von einem in dem Beschichtungsfilm vorhandenen bestimmten Material angeregt wird, wenn ein geschnittenes Stück mit Röntgenstrahlen bestrahlt wird, ist.

11. Vorrichtung nach einem der Ansprüche 8 bis 10, **dadurch gekennzeichnet, dass** mehrere der Sensoren ausgelegt sind, um das Vorhandensein/Fehlen von Anhaften des Beschichtungsfilms für geschnittene Stücke in mehreren Richtungen zu erfassen.

12. Vorrichtung nach einem der Ansprüche 8 bis 11, **dadurch gekennzeichnet, dass** sie weiterhin Bewegungsmittel (20, 21) zum Bewegen von geschnittenen Stücken in einer bestimmten Richtung umfasst, wobei das Trennmittel (24) in einer bestimmten Position mitten entlang eines Bewegungswegs des Bewegungsmittels zum Bewegen von geschnittenen Stücken platziert ist und Gasblasmittel (37) zum Blasen eines Gases gegen das geschnittene Stück, wenn das Ermittlungsmittel ein den anhaftenden Beschichtungsfilm aufweisendes geschnittenes Stück erfasst, umfasst, um eine Bewegungsrichtung des den anhaftenden Beschichtungsfilm aufweisenden geschnittenen Stücks zu einer Richtung zu ändern, die sich von einer Bewegungsrichtung eines keinen anhaftenden Beschichtungsfilm aufweisenden geschnittenen Stücks unterscheidet, wodurch die Trennung ausgeführt wird.

13. Vorrichtung nach Anspruch 12, **dadurch gekennzeichnet, dass** das Bewegungsmittel (20, 21) ein Abwurfmittel zum Abwerfen von geschnittenen Stücken ist.

14. Vorrichtung nach einem der Ansprüche 8 bis 13, **dadurch gekennzeichnet, dass** sie weiterhin ein Klassifizierungsmittel (19) umfasst, das in einer Beschickungsöffnung für geschnittene Stücke platziert ist, um geschnittene Stücke in mehrere Gruppen gemäß Partikeldurchmessern der geschnittenen Stücke zu klassifizieren, wobei der Sensor das Erfassen für jede der mehreren Gruppen der geschnittenen Stücke durchführt.

15. Vorrichtung nach Anspruch 14, **dadurch gekennzeichnet, dass** das Klassifizierungsmittel (19) eine Auslesevorrichtung zum Klassifizieren von geschnittenen Stücken gemäß dem Partikeldurchmesser ist.

## Revendications

1. Procédé de remoulage d'un matériau de résine comprenant:
une étape de préparation (S2) consistant à couper un produit moulé en résine revêtu d'une manière aléatoire en utilisant un outil de coupe (6) ayant une lame tournante (7) ;
une étape de décollement (S3) pour décoller le film de revêtement des pièces coupées obtenues dans ladite étape de préparation par frottement en utilisant une force mécanique; et
une étape de moulage (S8) consistant à exécuter le moulage en utilisant des pièces coupées auxquelles n'adhère pas le film de revêtement;
où ledit procédé comprend en outre:
une étape de détermination (S5) consistant à détecter et à déterminer la présence/absence d'adhérence du film de revêtement pour chaque pièce coupée individuelle après l'étape de décollement; et
une étape de séparation (S6) consistant à séparer une pièce coupée à laquelle adhère le film de revêtement des pièces coupées auxquelles n'adhère pas de film de revêtement, sur la base du résultat de détermination; et où:
l'étape de détermination (S5) détecte et détermine la présence/absence de l'adhérence du film de revêtement en détectant le film de revêtement lui-même ou un matériau spécifique présent dans le film de revêtement en utilisant un capteur;
l'étape de détermination (S5) exécute la détection dans une position spécifique à mi-chemin le long d'un chemin de déplacement sur lequel les pièces coupées sont déplacées dans une direction spécifique,
l'étape de séparation (S6) exécute la séparation, lorsqu'une pièce coupée à laquelle adhère le film de revêtement est détectée dans l'étape de détermination (S5), en soufflant un gaz contre la pièce coupée pour changer une direction de déplacement de la pièce coupée à laquelle adhère le film de revêtement en une direction différente d'une direction de déplacement d'une pièce coupée à laquelle n'adhère pas de film de revêtement, et
l'étape de décollement (S3) exécute le décollement dans un temps prédéterminé de sorte que les pièces coupées ayant une aire de film de revêtement résiduelle dépassant 50mm² restent, pour être détectées et sélectionnées à l'étape de détermination (S5) et à l'étape de séparation (S6).

2. Procédé selon la revendication 1, **caractérisé en ce que** l'étape de détermination (S5) exécute la détection en utilisant un photocapteur (30, 31) pour détecter le film de revêtement sur la base d'une différence de clarté, de saturation ou de teinte d'une couleur d'arrière-plan placée derrière les pièces coupées et différentes d'une couleur de film de revêtement.

3. Procédé selon la revendication 1, **caractérisé en ce que** la détection est exécutée par des moyens de détection (45) pour irradier les pièces coupées avec des rayons X, et la détection de rayons X d'une longueur d'onde spécifique excités par un matériau spécifique présent dans le film de revêtement.

4. Procédé selon l'une quelconque des revendications précédentes, **caractérisé en ce que** la détection est exécutée pour les pièces coupées dans plusieurs directions.

5. Procédé selon l'une quelconque des revendications précédentes, **caractérisé en ce que** le mouvement des pièces coupées est la chute.

6. Procédé selon l'une quelconque des revendications précédentes, **caractérisé en ce que** l'étape de détermination (S5) est exécutée, après que les pièces coupées ont été classifiées en une pluralité de groupes en accord avec des diamètres de particules des pièces coupées, pour chaque groupe de diamètres de particules classifiés.

7. Procédé selon l'une quelconque des revendications précédentes, **caractérisé en ce que** le produit moulé en résine revêtu est une pièce d'automobile usée (1).

8. Appareil de sélection de pièces coupées en matériau de résine comprenant:
un appareil de coupe (3) pour couper un produit moulé en résine revêtu d'une manière aléatoire en utilisant un outil de coupe (6) ayant une lame tournante (7); et
un appareil de décollement (9) pour décoller le film de revêtement de pièces coupées obtenues par ledit appareil de coupe (3) par frottement en utilisant une force mécanique;
**caractérisé en ce que** ledit appareil de sélection comprend en outre:
des moyens de déplacement (20, 21) pour déplacer les pièces coupées dans une direction spécifique;
un capteur placé dans une position spécifique par rapport aux pièces coupées mobiles pour détecter une pièce coupée à laquelle adhère un film de revêtement sur la base du film de revêtement lui-même ou d'un matériau spécifique présent dans le film de revêtement;
un moyen de détermination (50) pour déterminer que la pièce coupée a un film de revêtement adhérant à celle-ci sur la base du résultat de la détection par ledit capteur; et
un moyen de séparation (24) pour séparer la pièce coupée à laquelle adhère le film de revêtement de pièces coupées auxquelles n'adhère pas de film de revêtement sur la base du résultat de détermination par ledit moyen de détermination (50);
où:
ledit moyen de séparation comprend un moyen de soufflage de gaz (37) pour, lorsque ledit moyen de détermination détecte une pièce coupée à laquelle adhère le film de revêtement, souffler un gaz contre la pièce coupée pour changer une direction de déplacement de la pièce coupée à laquelle adhère le film de revêtement en une direction différente d'une direction de déplacement d'une pièce coupée à laquelle n'adhère pas de film de revêtement, en exécutant ainsi la séparation, et
ledit appareil de décollement exécute le décollement dans un temps prédéterminé de telle sorte que les pièces coupées ayant une aire de film de revêtement résiduelle dépassant 50mm² restent, pour être détectées et sélectionnées dans l'étape de détermination (S5) et dans l'étape de séparation (S6).

9. Appareil selon la revendication 8, **caractérisé en ce que** ledit capteur est un photocapteur (30, 31) pour détecter le film de revêtement sur la base d'une différence de clarté, saturation ou teinte d'une couleur d'arrière-plan différente d'une couleur de film de revêtement.

10. Appareil selon la revendication 9, **caractérisé en ce que** ledit capteur est un moyen de détection à rayons X (45) pour détecter des rayons X ayant une longueur d'onde spécifique excités par un matériau spécifique présent dans le film de revêtement lorsqu'une pièce coupée est irradiée avec des rayons X.

11. Appareil selon l'une quelconque des revendications 8 à 10, **caractérisé en ce qu'**une pluralité desdits capteurs sont agencés pour détecter la présence/absence d'adhérence du film de revêtement pour les pièces coupées dans plusieurs directions.

12. Appareil selon l'une quelconque des revendications 8 à 11, **caractérisé en ce qu'**il comprend en outre un moyen de déplacement (20, 21) pour déplacer les pièces coupées dans une direction spécifique, où ledit moyen de séparation (24) est placé dans une position spécifique à mi-chemin le long d'un chemin de déplacement dudit moyen de déplacement pour déplacer les pièces coupées et comprend un moyen de soufflage de gaz (37) pour, lorsque ledit moyen de détermination détecte une pièce coupée à laquelle adhère un film de revêtement, souffler un gaz contre la pièce coupée pour changer une direction de déplacement de la pièce coupée à laquelle adhère le film de revêtement en une direction différente d'une direction de déplacement d'une pièce coupée à laquelle n'adhère pas de film de revêtement, en exécutant ainsi la séparation.

13. Appareil selon la revendication 12, **caractérisé en ce que** ledit moyen de déplacement (20, 21) est un moyen de chute pour faire tomber les pièces coupées.

14. Appareil selon l'une quelconque des revendications 8 à 13, **caractérisé en ce qu'**il comprend en outre un moyen de classification (19) placé dans un orifice de chargement de pièces coupées pour classifier les pièces coupées en plusieurs groupes en accord avec les diamètres des particules des pièces coupées, où ledit capteur exécute la détection pour chacun de ladite pluralité de groupes de pièces coupées.

15. Appareil selon la revendication 14, **caractérisé en ce que** ledit moyen de classification (19) est un dispositif de criblage pour classifier des pièces coupées en accord avec le diamètre des particules.
